(19) Europäisches Patentamt
European Patent Office
Office européen des brevets

(11) EP 2 637 130 A1

(12) **EUROPEAN PATENT APPLICATION**

(43) Date of publication:
**11.09.2013 Bulletin 2013/37**

(21) Application number: **12171102.2**

(22) Date of filing: **06.06.2012**

(51) Int Cl.:
***G06Q 10/10*** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2012 IN MU06082012**

(71) Applicant: **Tata Consultancy Services Limited
400021 Mumbay (IN)**

(72) Inventors:
- **Mohanty,, Santosh Kumar
400093 Maharashtra (IN)**
- **Sarkar,, Shampa
400093 Maharashtra (IN)**
- **Viswanathan,, Jyothi
400093 Maharashtra (IN)**

(74) Representative: **Potter Clarkson LLP
The Belgrave Centre
Talbot Street
Nottingham
NG1 5GG (GB)**

(54) **Collaborative system and method to mine inventions**

(57) A system, method and computer program product for Collaborative Invention Mining (CIM) is described herein, comprising focused segmentation and articulation of an ideation data through a comprehensive 48-cell Idea Detailing Tree (IDT) module and systematically validating and maturing it iteratively towards patentable invention. The IDT is designed based on weighted Category, Area and Characteristic dimensions to widening scope, lengthening coverage and deepening sustenance capabilities of ideation object, respectively. The Collaboration workflow is designed on contextual SFNC (Storm-Form-Norm-Compose) hierarchical maturity stages, each of which further operates ETVX (Entry-Task-Validate-Exit) sequence to mature an ideation data efficiently on a fast track mode to maximize stakeholders' benefits with efficient use of resources. Scoring of the IDT matrix further evaluates and positions the ideation object by cell-pattern identification, dominance determination and Invention Mining Performance measure. A computer implemented system supporting the CIM process integrates with invention management system for administration, portfolio analysis and valuation.

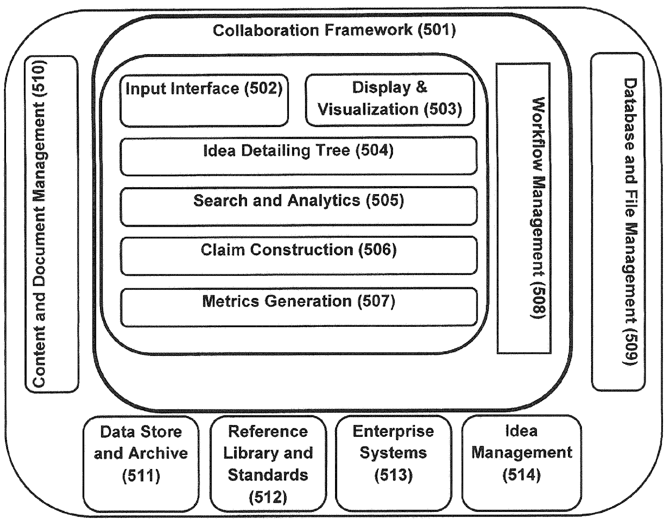


Figure 5

EP 2 637 130 A1

## Description

### FIELD OF INVENTION

The present subject matter of the invention described herein, in general relates to systems and methods for invention mining.

### BACKGROUND

Invention mining is the process of strengthening an ideation data through a collaborative interaction. The objective of such a process is to pose structured questions to develop capabilities towards widening, lengthening and deepening an ideation data, thereby further maturing it as a 'patentable invention'. The process in turn, facilitates the emergence of new inventors, sharpens the skill towards inventions and establishes invention communities in an enterprise.

Scott D. *Hicks et al.* From International Business Machines Corporation had filed a Patent Application (Ref: US20060218173) titled "Method, system and Program Product for Invention Mining", wherein the invention mining method comprises extracting and storing ideas of individual inventors participating in an invention in a first database and creating a consolidated invention disclosure report using information extracted from each of the invention disclosures, wherein all members of the project team can access the displayed such invention disclosure report.

Independent to it, Brainbank, Inc. has built up a Patent portfolio (Ref: US7533034, US20090132350, 20110093539) for idea management and development of an idea, wherein the methodology includes obtaining response from an inventor and to develop it through a series of templates comprising information regarding the financial consequences of implementing the idea, etc. Each submitted idea or request for ideas for such System and process is assigned to a facilitator who is responsible for performing tasks designed to advance the idea within the organization. The system tracks performance of these tasks and provides information, such as a list of experts available to consult in relation to an idea or task.

An ideation data in an Enterprise must be matured from business, technical, time sustenance, socio-economic and regulatory context to carry significant value and hence, should be taken further forward as promoting and protecting as Patent Application if maturity along such dimensions is achieved. This may in turn create a focussed inventors' portfolio in an Enterprise where ideation data from such community are more resilient and aligned to an Enterprise's business footprint.

### SUMMARY

The summary provided herein is to introduce the concepts related to system, method and computer program product for Collaborative Invention Mining of a singular or plurality of Ideation Data. This summary is not intended to identify essential features of the claimed subject matter nor is it intended for use in determining or limiting the scope of the claimed invention.

One of the preferred embodiments of the present subject matter comprises a computer-implemented Collaborative Invention Mining (CIM) system and a method to mine ideation data and eventually mature it towards a patentable invention. In particular, the present subject matter is realized through a CIM system comprising a collaborative framework, incorporating a plurality of modules to administer, structure, mature, validate, and measure the said ideation data.

An aspect of the present subject matter disclosed herein is further directed towards a collaborative workflow encompassing strengthening an ideation data by incorporating dimensional rigor along multitude predefined dimensions with manifold attributes enabling widening, lengthening, deepening and converging of a given ideation object. The method further comprises progressive collaborative structuring of the said ideation data by maturing along a hierarchy of incremental maturity stages through a series of predefined tasks and iterative validations.

A further aspect of the subject matter described herein incorporates an evaluation and scoring methodology and corresponding system modules to generate metrics that indicate inherent features of said ideation object thereon.

### BRIEF DESCRIPTION OF DRAWINGS

Further objects, embodiments, features and advantages of the present invention will be more apparent when read together with the detailed description and accompanied drawings. The objective of the drawings included herein is to lay more emphasis on understanding the underlying principle of the invention. The manner in which the drawings are presented in no way limit the scope of the invention and the advantages one can garner from the embodiments of the present invention.

The detailed description is described with reference to the accompanying figure(s). Different numeral references

on figures designate corresponding elements through different views. In the figure(s), the left-most digit(s) of a reference number identifies the figure in which the reference number first appears. The use of the same reference number in different figure(s) indicates similar or identical items.

Figure 1 illustrates the conceptual framework for maturing an ideation object through collaborative interaction.

Figure 2A is a figurative representation of the Idea Detailing Tree (IDT) schema and Figure 2B is a comparative representation of a wishful IDT that is desired as an output and a realized IDT that contains ideation objects for an ideation data that has undergone the process of collaborative invention mining.

Figure 3 illustrates the category, area and characteristic dimensions and the associated attributes for facilitating structuring of an ideation data which may lead to sustainable, focused claim creation.

Figure 4A represents a Collaboration Workflow Design of Invention Mining for progressively maturing an ideation data across 4-fold (SFNC) maturity stages with ETVX Sequence and Figure 4B exemplifies the CIM template for facilitating the same.

Figure 5 and Figure 6 illustrate various system modules that work in tandem in order to administer, mature, validate, evaluate and analyze ideation data received from a singular or plurality of inventors or from an inventor community in an enterprise.

Figure 7 depicts the scoring template to evaluate, score and position an ideation data or an invention.

Figure 8 shows the pattern analysis and cluster generation module incorporated in the CIM system.

Figure 9A and 9B illustrate derivation of Claim Tree, one of the visual outputs generated by CIM system.

## DETAILED DESCRIPTION

The embodiments of the present subject matter comprise a collaborative system, method and computer program product to mine inventions. The disclosed system, method and computer program product transforms an ideation data into an ideation object. The ideation object being a representative of the said ideation data. The transformation of the ideation data takes place through a singular or plurality of prebuilt maturity stages within a digitized collaborative workflow. The system and method described herein are orchestrated by a comprehensive 48-cell Idea Detailing Tree (IDT) module that collaboratively drives an ideation data across multitude of hierarchical maturity stages such that is questioned, deliberated, segmented and converged along Category, Area and Characteristic Dimensions comprising NIU, PTMS and EA3 attributes respectively, towards patentable claimable subject matter for a select set of jurisdiction. The framework is manifested as computer implemented CIM system that comprises modular objects that interact in a collaborative manner to administer, structure, mature, validate, evaluate and analyze the identified ideation data so as to accord it as patentable invention. Such a system and method serves to objectively assess ideas that are contributed by a singular or plurality of inventors, or inventor communities in an enterprise.

In order to create a strategic, agile and time-sustainable patent portfolio, it is important to impart multiple dimensional rigor to ideation data systematically to position it appropriately, which may facilitate further in crucial decision making for investment and at the same time create a focused community of inventors contributing towards sustainable ideation funnel in an enterprise.

For the purpose of gaining understanding into the underlying principles of the invention and its various features, reference will be made to the embodiments illustrated in the drawings. Also it is important to note that the detailed description presented herein does not intend to dilute or limit the scope of the invention. Any alterations and further modifications in the described embodiments and any further application of the principles of the invention as described herein are construed as it would normally occur to one skilled in the art to which the invention relates.

An idea or ideation data represents a thought that could be potentially novel, creative, and can be applied to a process, technology, tool, framework, apparatus, device, system, metrics, etc. When the thought process behind an idea data is given direction, the idea has the potential to turn into a 'spark of ingenuity', which can be harnessed by an individual/enterprise.

Typically, patents or inventions originate from ideation data which need to be assessed from close quarters such that they generate substantial value in leveraging, licensing, building a portfolio, conducting business, etc. We define Invention Mining as a collaborative, sequential, structured process that can yield dividends to mature ideation objects into patentable inventions for a select set of jurisdiction.

With reference to Figure 1, The Collaborative Invention Mining framework (100) comprises three primary dimensions - Category (101), Area (102) and Characteristics (103), along which an ideation data is structurally strengthened and further being evaluated through collaborative workflow. The 'Category' dimension (101) broadly categorizes the width of an ideation data across conceptual, technological advancement or commercial implementation categories. The 'Area' dimension (102) comprises a classification based lengthening of an ideation data along various capability building constituents. The 'Characteristic' dimension (103) comprises segmenting the ideation data across time sustenance facets to further deepen the capability towards longevity and sustainable valuation. Further, for each of these said dimensions, a set of attributes has been defined according to the present context of invention mining and idea maturity.

The 'Category' dimension (101) comprises attributes of 'Novelty', 'Inventive Step' and 'Utility' (NIU) to critically assess an ideation data's scope of patentability. These three attributes have been identified, as most jurisdictions examine patents on the basis of Novelty, Inventive Step and Utility. Furthermore, each of these attributes has been contextually defined in order to examine an idea using state-of-the-art Collaborative Invention mining System.

'Novelty' is defined as a patentability scope of an ideation data, which assesses said data to be new, in the context of pre-existing knowledge in public domain.

'Inventive Step' is defined as a patentability scope of an ideation data along the line of technical advancement as compared to existing knowledge or (thereby) creating economic significance or both and that makes an ideation data not an obvious extension or mere re-arrangement of known existing components to a person skilled in the art.

'Utility' is defined as a patentability scope of an ideation data that demonstrates the applicability in a new way for a given set of real world scenarios resulting into socio-economic impact either on mass scale or on a stratified population.

Similarly, the 'Area' (102) dimension comprises attributes of 'Process', 'Technology', 'Measurement' and 'System' (PTMS) that are necessary to develop capability maturity of an ideation data. The contextual definitions of PTMS attributes are as described herein.

'Process' is broadly defined as a method or a framework for performing a function or accomplishing a task or solving a problem.

'Technology' encompasses an entirely new technology area, newer interdisciplinary or integration of disparate fields/technologies or mashup technology or significant advancement/improvement in an existing technology, in certain areas to solve the technical aspects of an ideation data.

'Measurement' is related to defining a set of tools, measures, metrics, etc. to measure or optimize a process, technology, or a system performance.

'System' comprises a set of physical objects including product, device, machine, apparatus, article of manufacture, composition of matter, etc., which may be closely linked or is manifesting a process, technology or measurement.

The 'Characteristic' dimension (103) comprises 'Efficient', 'Adaptable', 'Agile' and 'Anticipative' (EA3) as the attributes to measure time sustenance of an idea. These attributes measure the characteristic of an ideation data in combination with the Category and Area. An 'Efficient' characteristic measures self-optimization of an ideation object 'doing more with less' in terms of lower cost, minimum infrastructural modification, time reduction, better quality, less effort, optimization through process standardization, etc.

An 'Adaptable' characteristic determines flexibility of an ideation data element for resilience to change, to make it fit for nearly similar scenarios.

An 'Agile' characteristic determines the responsiveness of an ideation data element to a given scenario and its fitment.

An 'Anticipative' characteristic determines longevity of an ideation data to future need and create novelty at the present time to address it.

It is important to note here that the said contextually defined dimensions and attributes are mere representation of manifold aspects to impart dimensional rigor thereby structurally maturing an ideation data. There may be other similar terminology or nomenclature that may sufficiently encompass the intended meaning of said attributes and parameters and would not limit the scope of the subject matter.

Each of the throughputs of ideation data segments under aforementioned Category, Area and Characteristic dimensions and their corresponding plurality of attributes have to be validated iteratively and efficiently in a collaborative manner. The Validate and Iterate (104) dimension of the framework, is thus the module where the ideation data is further validated to identify, extract its novel essence after which it is built and enriched further upon those. An embodiment of said dimension is achieved through efficient and agile use of enterprise resources such as a Knowledge Base, interaction with expert communities, searching for patent and non-patent literature in known sources and others. To a person skilled in the art, there may be a combination of resources and processes that are not explicitly mentioned here that could be employed in order to perform validation and iteration.

The objective of CIM framework, is to extract an enriched ideation data after a series of questioning and deliberation in a collaborative environment such that the throughput is a structured invention, which may further be depicted in a Technical Note and an Invention Disclosure (105) in a prescribed format to be taken up for the patent filing process.

It is necessary to have a structured approach to mature an ideation data across a plurality of dimensions and attributes, the absence of which can prove to be complicated process. One such simplification is a construction of an Ideation Tree.

A schema of said Ideation Tree (200) is represented in Figure 2A. Base of the tree symbolizes funnel of an ideation data, which has entered into the Collaborative Invention Mining Workflow. The idea detailing tree enables analysis and filtering of the ideation data in order to determine one or more ideation objects in accordance with one or more prebuilt maturity stages within a collaboration workflow. The ideation data at its current developmental stage is

channelized first through N-Funnel (201) (Novelty), I-Funnel (202) (Inventive Step) and U-Funnel (203) (Utility), signifying widening scope of the ideation data along NIU Patentability criteria, epitomizing widening of the tree stem. With progression to higher level of maturity, each of the widened ideation objects or segments can further be deliberated towards lengthening into Process, Technology, Measurement and System (PTMS) branches, with focus on building capabilities along PTMS areas (represented in 204 to 206). To make each ideation object time sustainable, one needs to deepen the sustenance characteristics of a segment to make it Efficient, Adaptable, Agile and Anticipative (EA3). These can be visualized as fruits, leaves, flowers and seeds of each P, T, M and S area coverage (branches), being branched out of each of N, I and U category funnel (N-PTMS-EA3, I-PTMS-EA3, U-PTMS-EA3). Thus, in all, there are 48 such elements in which a plurality of ideation objects can be mapped and visualized, for the sake of clarity; these /segments have been represented as 'fruits, leaves, flowers and seeds' of the Ideation Tree. This has been represented in Figure 2A and Figure 2B. The best scenario can be described as one where all 48 elements of the tree have been realized through the Collaborative invention mining process, however, in a practical scenario, the validated facets of the ideation objects are only being envisaged in a realized ideation tree. Moreover, the pattern of the realized IDT may reveal the ideation object' dominant field and claims clusters. A balanced, sparsely distributed, over-crowded or nearly full distribution of IDT fruits, leaves, flowers and seeds may further prompt segregation, deliberation, separation, bucketing of ideation objects into a singular or plurality of ideation data.

Further, one of the embodiments of the present subject matter is to identify succinct, unique claimable elements, which can be mapped to ideation objects of ideation data. For such throughput, the Ideation Tree may be simplified into a structure as illustrated in Figure 3. The elements thus identified, may effectively be translated into claims using the right expression. This structure is indicative of the elements that can be derived from the IDT. At this juncture, it is imperative to point out that any person skilled in the art can appreciate and acknowledge that said dimensions and attributes defined, and the interrelation between these can be ably represented by any other structure or similar matrix.

Collaboration workflow of Invention Mining process is based on defining a maturity hierarchy that drives the workflow along which ideation data is systematically and objectively strengthened in a focused manner by identifying resources, defining role play, associating task-based deliverables and validation mechanisms at each of these maturity stages. The maturity stages defined herein are Storm-Form-Norm-Compose (SFNC) in an increasing order of hierarchy. Ideation data that progresses along these stages has the potential to converge resiliently as claimable subject matter with wider, broader (lengthening) and deeper scope. Figure 4A broadly represents the CIM SFNC stages, activities defined therein, and corresponding role players to develop an idea in a structured, objective manner. More details regarding the iterative activities and roles are explained in subsequent paragraphs.

The crux of the CIM framework is incorporated in a comprehensive matrix-format termed as Idea Detailing Tree (IDT). Refer to Figure 4B. IDT is an efficient tool which enables the inventors' community and other stakeholders to elaborate the idea on a fast track mode and expand it around said dimensions of Category, Area and Characteristics. Refer to Figure 4B for an indicative representation of the matrix. The IDT thus is a matrix comprising 48 cells that are mapped to the three NIU categories, 4 PTMS areas and the 4 EA3 characteristics. As the process of detailing an idea can be complex, because of plurality of dimensions and related attributes, the growth maturity of the idea may become difficult to visualize intuitively. The Idea Detailing Tree Schematic allows a simplistic visualization of what would otherwise be a complex, convoluted workflow.

An exemplary embodiment of the subject matter described herein is the IDT. The NIU Category dimension defines the N, I and U blocks of the IDT matrix along which first a set of idea elements/segments can be widened towards patentability scoping. Each of the claim segments in N, I and U categories are further deliberated to lengthen the area coverage along Process, Technology, Measurement or System (PTMS) capabilities, which produces 12 cells (3x4) in the matrix (facilitating widening and lengthening scopes of the claim segments). Further, each of the claim elements in P,T, M and S area capabilities for each of N, I and U categories are scoped for deepening along Efficient, Adaptable, Agile and Anticipative (EA3) time sustenance characteristics, which produces 48 cells (12x4 = 3x4x4) of the IDT matrix.

The IDT framework is driven by a collaborative process that is supported and complemented by a Collaborative Invention Mining System (Figure 5 and Figure 6). As depicted, an idea is first widened, then lengthened and further deepened across a multitude of attributes that have been contextually defined. In addition, to the 48-cell matrix, the IDT also has a provision that links each of these steps of Widening Lengthening, and Deepening with a collaborative process based approach that has been contextually defined as Storm, Form, Norm and Compose (SFNC) maturity stages. Each of these said stages play a role in maturing an idea and is facilitated by predefined tasks and iterative validations that lead an ideation data progressively from Storm, Form, Norm and Compose hierarchy of incremental maturity stages. The terminology Storm, Form and Norm are context based and are limited to the subject matter described herein, that of Invention Mining. These are not to be construed as general terminology.

The detailing of the features of IDT matrix/template comprising collaborative workflow throughput are described herein. As an ideation data enters the Invention Mining Process, ideation objects/segments are lodged at the 'Parking Lot' zone. During the Storming stage of widening the scope of the idea, these objects are built along N, I and U categories and are brought into the Storm Pad zone. At the same time, there may be a possibility of some ideation objects/segments

that may remain in the parking lot zone. Each of these objects in the Storm Pad are successively lengthened along P, T, M and S areas and then raised to the Form Pad.

The IDT matrix or Norm stage matrix is then populated with these structured ideation objects during the Norm phase with the focus on further deepening the time sustenance characteristics of each of these objects which are then converged during the Compose phase, to map them to the Claim Tree diagram. Thus, the IDT framework is a base to start the Collaborative Invention Mining process.

An initial basic input is a free flow list of broad aspects pertaining to the ideation data. The process of Invention Mining imparts the desired impetus or lift to widen, lengthen and deepen its scope via collaboratively deliberating through SFNC maturity stages. Refer to Table 1 for a context based definition of said SFNC stages.

**Table 1: Definition of SFNC**

| Maturity Stages | Context based Definition |
|---|---|
| **Storm Phase** | Adopt to 'widen' the ideation data across NIU Category Dimension |
| **Form Phase** | Adopt to 'lengthen' the ideation data across PTMS Area Coverage |
| **Norm Phase** | Adopt to 'deepen' the ideation data across EA3 Time sustenance Characteristic |
| **Compose Phase** | Adopt to converge on patentable objects |

In order to widen, lengthen and deepen an ideation data in a focused manner, each of these said maturity levels comprise an ETVX (Entry-Task-Validate-Exit) Sequence which in conjunction with appropriate resources, tasks and roles mature an idea. Before understanding the ETVX sequence for each maturity stage, it is important to define ETVX. Broadly it stands for Entry, Task, Validation and Exit.

Entry is the first stage of the ETVX sequence, where idea/idea objects enter the respective maturity stage with previous stage's delivery.

Task attribute strengthens ideation segments based on the assigned task of the corresponding maturity stage. Throughout the collaboration workflow, the task attribute is designed to perform Questioning, Deliberating, Segmenting and Converging across Storm, Form, Norm and Compose maturity stage, respectively.

Validate step validates in an iterative loop, the patentability criteria of each of the ideation objects after performing the task of the respective maturity stage. After a task is complete, validation ensures completeness with respect to meeting objectives at the task at a set stage. Validation and completing a task until all criteria are met may have a plurality of iterations.

Exit is the last step of the sequence, which commits delivery of the current state.

Role Play is an important collaborative link in the entire workflow and maturity stages. Roles have been anticipatively created with a focus on performing tasks at each stage resiliently and efficiently, ensuring optimal outcome. The role hierarchy is also inherently linked to the resource framework, therefore is designed to adapt changes in the resource infrastructure. A 'Moderator' governs the collaborative Invention Mining process and plays a lead role throughout the workflow (including governance at each maturity stage). Refer to Figure 4A for details.

To enhance collaboration and make it more effective, roles have been tagged to the critical actions or tasks that will be performed at each maturity level. Thus, in order to question, deliberate, and segment, roles tagged are described below. The word 'Hat' has been used to indicate a process of parallel thinking and task-based thinking (e.g. N-Hat, 1-Hat and U-Hat to represent role-plays for parallel thinking towards widening the ideation segments along Novelty, Inventive Step and Utility Patentability Criteria, respectively) and efficient collaboration throughput by converging various parallel thought processes to a holistic outcome.

Thus, for the Storm Phase, the task-based role players are: N-Hat, 1-Hat and U-Hat. Similarly, for Form Phase, the task-based role players are: P-Hat, T-Hat, M-Hat and S-Hat, and for Norm Phase, the task-based role players are: Eff-Hat, Add-Hat, Agl-Hat and Ant-Hat. Note, that this is a broad terminology to define participants in the process.

Importantly, as discussed earlier, a Moderator governs the collaborative process. It is the Moderator's role to decide the number of people, their capabilities, to ensure effective participation and fitment for the aforementioned Hat-roles.

Specialist roles are defined in order to perform validation, which is then mapped to maturity stages. For instance, across all stages there is a Prior Art Analyst who validates claimable ideation objects against patent and non-patent literature iteratively across the collaboration workflow, verifying the widening, lengthening and deepening scopes of the idea objects, respectively. Another role is that of a 'Scripter' who is responsible for providing input for summarizing a multi-thread discussion for every atomic idea in a cryptic and understandable form. Yet another specialist role is that of a Claim Analyst to verify and validate claims identified in the process and then represent them in a claim tree. In addition, when an ideation data is matured such that it can be transcribed into a Technical Note followed by an Invention Disclosure

Form, a Technical Writer role articulates the idea.

A broad view of the collaboration stages described above can be appreciated better in conjunction with a Collaborative Invention Mining System. Said system administers, governs, monitors and measures the collaboration framework. The system is described in detail in order to understand the synergistic features of the present subject matter. Figure 5 provides a broad view of the components, whereas Figure 6 drills into the granular level details of the components.

The Collaborative Invention Mining System (500) is built around a collaboration driven workflow model. One embodiment of the subject matter is realized as a product being used in a computing environment. The software programs for such a product may comprise routines and subroutines/source codes written in a computer language to perform invention(s) valuation, scoring and rationalization, described as an embodiment of the present subject matter. Such a product can be contained in a variety of computer-readable or computer-rewritable media, wherein such media may include, but are not restricted to CD-ROM, DVD-ROM, floppy disks, hard disk drive, diskette drive, or other form of storage media, on which alterable/upgradable information can be stored.

The Collaborative Invention Mining System (500) rests on a collaboration framework (501). Said framework is supported by Content and Document Management System (510) and Data and File Management System (509). Said systems maybe enterprise resources or external resources that can be accessed by the enterprises and is referenced at various stages of the collaboration workflow, as will be evident in the subsequent paras.

**[0065]** Input interface (502) is where the system receives an input from the stakeholders when they perform their key tasks across all stages of collaboration. Input is received from standard input means of devices and user devices known in the art and is further stored in one or more database.

An Idea Management (514) module manages, tracks and administers ideation data that are input to the system. Said module in turn comprises a Scheduler (611) to determine a Moderator, Scripter, Prior Art Analyst, Claims Analyst and Technical Writer for an ideation data that enters the system. Scheduling is done by selecting from among a pool of experts in an enterprise. Selection is done based on subject matter expertise and availability. Needless to say, for all roles, except that of a Prior Art Analyst it is mandatory for the resource to be from the inventor community. This criterion is also validated by connecting to other Enterprise Management Systems through an IP Management Interface Module (613) such as IP Management and Filing system to select from a list of inventors. Further, the module also takes into account, relevant details such as name of inventor, location, business unit details etc so as to reflect in reports.

In addition, the Idea Management System (514) also comprises an Idea Tracking (610) sub module, which generates a unique idea number to an ideation data that has been logged into the system. Idea Tracking sub module tracks progress of an ideation data across stages of maturity along with a Workflow Management module (508) which is further a digitized collaboration based workflow management module (508). Idea Management module (514) manages and tracks an ideation data. Roles defined for various SFNC stages are assigned certain access privileges. Roles and privileges are mapped by a system administrator for the CIM system. There may also be scenarios where roles converge, for example, a Moderator and a Scripter could essay the same role for an idea, and hence their access privileges could converge. The mapped role-privilege is stored in Idea Tracking sub module (610) and is modified as and when users register into the system to submit an ideation data. System Administrators perform an audit and maintain logs by tracking user registration, authentication and idea submission.

Idea tracking (610) tracks an ideation data as it moves from various stages. Movement from one stage to the other or completing of a task at a particular stage, validation that needs to be performed is alerted by an Alert Publisher sub module (612) of Idea Management module (514). Alert Publisher (612), shares alerts when ever any task is complete, needs to be completed or when a related asset, such as Search Report, Gap Analysis Report pertaining to the idea is released. Alerts may be generated via email to inform stake holders participating in the collaborative process.

Further, the module also tracks and maintains assets that are an entry or exit criteria of the SFNC stages. As soon as an ideation data is input to the CIM system, it is accorded a unique tracking number. Stakeholders and role players who are instrumental in working on the idea are only provided access to that idea. For example, if a moderator is assigned Ideation object 1, that moderator cannot play a similar role for Ideation object 2 unless there is an assignment by the scheduler and appropriate access rights are granted. As the ideation data progresses across these stages, output of each stage, such as, A Prior Art search report, search artifacts, Storm Pad Zone, Form Pad zone, IDT matrix for Norm, Claim statements, Claim Tree, Score card and related metric and other such inter-related objects to the ideation data are also tracked and stored in databases, such that they can be easily referenced during the collaboration process.

Workflow Management (508) and Idea Management (514) are logically and communicatively coupled. Workflow Management module (508) controls progress of an ideation data's stages, that is, an ideation data can move to the next stage only if its inputs and tasks have been validated and approved by the respective stakeholders. For instance, an ideation data cannot move from Storm to Norm without valid submission of Form pad that has been tagged to an idea, or mapping of prior art elements with ideation objects.

To begin the process, inventor community enters details through an Input Interface (502), into the Idea Detailing Tree (504). The IDT template (504) comprises an Idea Detailing Matrix along with the zones - Parking Lot, Storm Pad, Form Pad and the Norm matrix where stakeholders log in their input. Said portions of the IDT (504) are made visible

according to the stage of the workflow. This is controlled by Workflow Management module (508) which indicates at what stage the ideation data is within SFNC. In an embodiment, in the Storm stage, that is, the first stage of maturing an idea, the ideation data will be widened along Novelty, Inventive Step and Utility (NIU) Patentability Categories. Thus at this stage, only the Parking Lot and the Storm Pad is made visible to the inventor community. The Storm stage (614) is active in the Workflow Management module (508). Parking Lot is where the idea originator or inventor can log features of the idea. The Storm pad comprises drop down list where, the category that needs to be widened is selected. There is a drop down list provided for Novelty, Inventive Step and Utility, after selecting a category, a plurality of features of the ideation data related to either NIU category can be logged. Refer to Table 2 to understand ETVX for Storm stage.

**Table 2: Storm Stage Definition**

| CIM Stage | Storm |
|---|---|
| Purpose | Questioning to widen the ideation data across category |
| Entry Condition | Ideation Data - Base List, Prior Arts - Base List |
| Task to Perform | Question to generate new concept level ideation |
| | Question to identify new inventive steps |
| | Question to apply the concept and inventive steps |
| Validation | Map the revised set of ideation objects with collected prior arts |
| | Search for more prior arts and map it to revised set of ideation objects |
| Exit | Publish Ideation Objects - Storm List and Prior Arts - Storm List |
| Role Play | Moderator, Scripter, Prior Arts Analyst, N-Hat, I-Hat, U-Hat |

Since each ideation segment is questioned on the very basic criteria of patentability - Novelty, Inventive Step and Utility, it is imperative to perform a prior art search to establish a validity of the ideation segment. A Prior Art Analyst performs a preliminary prior art search. In order to perform an accurate yet effective search, a Search and Analytics (505) module has been developed to facilitate validation and iteration of the ideation objects of an ideation data. The search and analytics module (505) performs the search by referring to one or more external databases. This module further comprises a Landscaping (607), Gap Analysis (608) and a Search Index (609) sub module.

Search Index (609) comprises a set of attributes that can be used to search within patent databases and non-patent literature. Said index comprises a compiled list of keywords, IPC code, US classification, DWPI, a combination of details such as assignee names, date of filing, publication details, date of publication, geographies filed or published and other such details or a combination thereof to facilitate an effective search. The attributes or a combination of attributes used to search for related prior art are tagged with an identification related to an ideation data that is input to the system. These attributes are collectively stored for any potential reuse. Landscaping (607) performs a search based on the input attributes by accessing patent and non-patent literature through the IP Management Interface Module (613) in order to identify similar concepts. Further, said sub module also highlights where the ideation data is in relation to other patents and non-patent literature. Search artifacts generated are communicated to Gap Analysis (608), where gaps with respect to search artifacts are identified. For instance, if the current ideation data illustrates a method, and if there is scope to bring out a system or a technology aspect to the ideation data, with reference to Prior Art, the Gap Analysis sub module (608) flags that by generating a Gap Analysis report, which is then shared with the Moderator and inventor community to deliberate on.

The IP Management Interface Module (613) connects to disparate systems that may exist within or outside an enterprise. Search and Analytics (505) may also access enterprise systems such as IP Management and Filing system to identify if similar ideation data have been filed. The result of the Search and Analytics (505) module is a search report containing search artifacts identified during the search operation.

The generated search report is shared by the Prior Art Analyst, who also visually differentiates similar concepts entered in the Storm Pad. The Moderator, Scripter and idea generators receive an alert when the search report is generated. Alerts are generated by an Alert Publisher sub module (612) residing in the Idea Management (514) of the system. Alerts are a means of triggering the next sequence of events. The generated Search Report is accorded an asset ID by the Idea Tracking (610) sub module. The generated search report is stored in a data repository - Data Store and Archive (511), which may be accessed by stakeholders who have necessary privilege and access.

Thus, the task at hand with the inventor community is to provide differentiating features of the ideation data with respect to Novelty, Inventive Step and Utility and question such that new concepts, inventive steps and means to implement the concept and the inventive step emerge in relation to said ideation data.

Moderator, Scripter and the inventor community map the differentiating features, also termed as a revised set of ideation objects with the preliminary prior art report. Since, new ideation objects or segments have emerged after focused questioning, it is but obvious to search for prior art that is related to the revised ideation objects. The search is again carried out by Search and Analytics (505). Thus, the exit criteria for Storm stage is a published set of ideation segments that are input to the Storm Pad of the Idea Detailing Matrix, a list of prior art objects that will be referenced on demand.

Validation at the storm stage comprises thoroughly reviewing the Prior Art. The Prior Art Analyst, highlights features of the prior art that may conflict with features of the ideation segments listed in the Base List as per the Preliminary Report. The Prior Art Search Analyst, logs in comments through the IDT Validation sub module of IDT. As soon as search report is generated, Alert Publisher generates an alert message. Moderator, Scripter and Inventor Community question the idea concepts after correlating to preliminary prior art. At this stage, some objects from the Base List may be struck down due to lack of Novelty Inventive and Utility. Preliminary Prior Art Report serves as a learning and motivation for inventors to widen scope of the idea when certain elements are knocked out. It also provides a dimension on different approaches to solve a problem. Whereas, ideation objects that are retained, are further widened and yet another prior art search is conducted to verify if said segments are novel, possess inventive step and utility.

Resources to support the tasks in order to validate and progress to the next stage could be either one of or a combination of an enterprise's knowledge repository, gaining access to centers of excellence, subject matter expert communities within an enterprise, access to patent search databases or non-patent literature sources.

The end of the Storm stage is triggered by revised ideation objects fixed in the Storm Pad. A search report containing details of prior art information as per objects disclosed in Parking Lot zone by the stakeholders. Yet another search report based on revised objects. Since ideation objects in the Storm Pad may have been revised, it may be worthwhile to note that some points may have been deleted due to existing prior art or modified after questioning and deliberation. Once output (Storm pad revised, Search reports) have been validated, Workflow Management module (508) moves to the next stage, that is, Form.

Next stage of collaboration is the 'Form' stage, where ideation segments of an ideation data (after being widened along N, I, U categories through the Storm phase) are deliberated further towards lengthening the scope of each one of them along coverage area of Process, Technology, Measurement and System (PTMS) capabilities. The key role players are Moderator, Scripter, Prior Arts Analyst, and P-Hat, T-Hat, M-Hat, S-Hat and the deliverables are the 'Form Phase Base list' having claim elements which are lengthened along PTMS after being widened across NIU, while being validated iteratively with respect to the existing prior arts. Refer to Table 3 to understand ETVX defined for Form Stage.

**Table 3: Form Stage**

| CIM Stage | Form |
|---|---|
| Purpose | Deliberating to lengthen the ideation data across coverage area |
| Entry Condition | Ideation Objects - Storm List, Prior Arts - Storm List |
| Task to Perform | Deliberation on each ideation object to identify 'process' originality |
| | Deliberation on each ideation object to identify 'technology' originality |
| | Deliberation on each ideation object to identify 'measurement' originality |
| | Deliberation on each ideation object to identify 'system' originality |
| Validation | Map the revised set of ideation objects with collected prior arts |
| | Search for more prior arts and map it to revised set of ideation objects |
| Exit | Publish Ideation Objects - Form List and Prior Arts - Form List |
| Role Play | Moderator, Scripter, Prior Arts Analyst, P-Hat, T-Hat, M-Hat, S-Hat |

In the Form Stage, the Storm pad of the IDT Matrix is used as base input, along with the further prior art identified by the Prior Art Analyst. The ideation segments listed in the Storm Pad are deliberated on to identify uniqueness or originality in Process, Technology, Measurement or System perspective. Stakeholders who participate in the deliberation process provide focused comments that address PTMS perspective in the IDT (504) to lengthen the idea. At this stage, the Form pad of the IDT is made accessible to the stakeholders by Workflow Management module (508). In the Form Pad zone, the Scripter identifies PTMS elements from among the ideation segments listed in the Storm pad. There could be multiple mapping for ideation objects disclosed. As soon as the mapping in the Form pad is completed and saved, an alert is generated by Alert Generation (611) to the Prior Art Analyst to perform a search for the said PTMS segments identified. At this stage, the Workflow Management module (508) is at the Form Stage (615).

The revised set of ideation segments are mapped with yet another tagged asset - a prior art search report that is later stored in Data Store and Archive (511). As soon as a Prior Art report is received, an IDT Validation (602) operation takes place. The IDT Validation sub module (602) flags conflicting parts of the ideation segments Vis-a-Vis the search report and an alert is generated to the stakeholders. The stakeholders share a revised set of ideation segments in the Form pad zone. IDT Validation (602) is where ideation segments related to PTMS are iteratively validated and revised. The list thus generated after circumventing prior art is tagged, published and stored in a data repository (511). The published list, tagged to the idea is visible to all stakeholders.

A final set of ideation objects for which PTMS areas have been identified are listed in the Form Pad of the Idea Detailing Matrix and published as a Form List. Also, prior art search identified by the Prior Art Analyst for the PTMS areas are tagged to the Form pad zone. Resources used for lengthening an ideation object could be patent search databases, non-patent literature, Information and resource centers exist within an enterprise, deliberation with subject matter experts and knowledge repositories that are accessible within an enterprise. After an enriched idea is given a shape from the PTMS perspective in the Form Pad, the next stage, which is the Norm Stage, is triggered. At this stage, the Work Flow Management (508), indicates Norm Stage (616).

Said stage has been defined as the maturity stage to segment the widened and lengthened claim elements towards deepening the time sustenance capabilities along Efficient, Adaptable, Agile and Anticipative (EA3) characteristics. The key role players are Moderator, Scripter, Prior Arts Analyst, and inventor community who analyze ideation objects from EA3 perspective and deliver focused statements in the IDT area as claimable features. Deliverables are claim segments being incorporated in the IDT matrix after being validated iteratively with respect to the existing prior arts. Refer to Table 4 for the ETVX steps defined for the said phase.

**Table 4: Norm Stage Definition**

| CIM Stage | Norm |
|---|---|
| Purpose | Segmenting to deepen the ideation data across characteristics |
| Entry Condition | Ideation Objects - Form List, Prior Arts - Form List |
| Task to Perform | Segmenting each ideation object to identify 'Efficiency' characteristic |
| | Segmenting each ideation object to identify 'Adaptable' characteristic |
| | Segmenting each ideation object to identify 'Agile' characteristic |
| | Segmenting each ideation object to identify 'Anticipative' characteristic |
| Validation | Map the revised set of ideation objects with collected prior arts |
| Exit | Publish Ideation Objects - Norm List and Prior Arts - Norm List |
| Role Play | Moderator, Scripter, Prior Arts Analyst, Eff-Hat, Add-Hat, Agl-Hat, Ant-Hat |

From the Form pad, each PTMS aspect of the ideation segment is analyzed to determine a multitude of EA3 characteristics. There is a possibility of fitting an ideation segment in more than one characteristic owing to the inherent nature of the same. Again, the Prior Art Analyst performs a search to determine if any of the EA3 characteristics so identified are disclosed in any prior art document. The IDT Validation sub module (602) flags conflicting areas which is reported by the Prior Art analyst to the inventor community.

A further set of ideation objects are reported in the IDT by the Scripter and the inventor community. Output at this stage is well defined EA3 characteristics for ideation objects that map to PTMS areas and NIU categories in the IDT matrix. A comprehensive detailing of the IDT is complete at the stage. The detailed IDT after a review is then tagged with an asset ID and associated with an ideation data in the Idea Tracking sub module (610) of the Idea Management module (514) of the CIM system before progressing to the Compose stage.

The next and final stage of collaboration is the Compose stage, where cluster, pattern analysis and claim analysis is performed for said ideation data. The 'Compose' Phase is a final maturity stage where various ideation objects are converged logically for an objective review to decompose the objects identified as claims. Further refinement in this stage, comprises claim construction which is performed by a Claims Analyst. A Claim Construction module (506) receives the IDT matrix containing revised ideation objects, saved and submitted by the inventor community. Said module is accessed by a Claims Analyst, who reviews the statements and converts them to claim-like statements which are later incorporated into a patent draft. The Claims Analyst performs a review of statements and also compares them to claims that have been disclosed in patent documents identified during the prior art searches. This due diligence is a necessary and pre-emptive step which can be likened to a FTO like exercise. Claims thus modified are highlighted in the Claim Mapping and Validation sub module (603) and the Scripter, Moderator and inventor community are sent alert messages. The claim statements may be reviewed iteratively, facilitated by the CIM system before finalizing the IDT matrix.

At this stage, the Claims Analyst also prepares a Claim Tree or an Arboreal Representation which is a graphical representation of claims that have been finalized for a set of ideation objects associated with a said idea. Said claim tree is stored in the Claim Mapping and Validation sub module (602). This will be referenced by the Display and Visualization Module (503) to render an output at a later stage.

The key role players for the Compose phase are Moderator, Claims Analyst, Scripter, and Technical Writer. Deliverables are the Technical Note and the Claims Tree. Refer to Table 5 for ETVX definition.

**Table 5: Compose Stage Definition**

| CIM Phase | Compose |
|---|---|
| Purpose | Converging the ideation objects from Norm-List |
| Entry Condition | Ideation Objects - Norm List, Prior Arts - Norm List |
| Task to Perform | Identify the category pattern |
| | Identify the area pattern |
| | Identify characteristic pattern |
| | Review and edit the ideation object statement |
| | Convert the ideation objects into claims tree - Independent claims and associated dependent list |
| | Profile the 'Claims Tree' and Identify the 'Invention Cardinality' |
| | Split 'Claims Tree' based on 'Invention Cardinality' |
| | Prepare 'Technical Note' |
| | Submit request for patent drafting |
| Validation | Audit 'Claims Tree' |
| Exit | Publish Technical Note, Claims Tree |
| Role Play | Moderator, Scripter, Technical Writer, Claims Analyst |

Pattern analysis is an important determination that is recorded at this stage. The IDT matrix is thoroughly examined to identify category, areas and characteristic patterns for said ideation object of an ideation data. A statement that describes the ideation object is articulated as a patent claim by the Claims Analyst. The number of independent and dependant claims is determined for the ideation object. The number of claims will determine invention cardinality. The claims, once finalized are transcribed into a visual format, termed as a Claim Tree. Said tree represents the independent and dependant claims identified for each area, category and characteristic dimension.

Said Claim Tree is another preferred embodiment of the present subject matter. It provides a guideline to classify, structure and represent claims for a said ideation object. The Claim Tree is thus an intuitive, real-time visual representation of the number of claim elements, and their characteristics. Construction of claim tree is derived from Norm matrix of the IDT and the Claim Construction module. Claims Analyst, after reviewing claims, constructs a Claim Tree. Claim Tree comprises components to visualize claimable elements - A first portion is visualized from an Idea Detailing Tree, a second portion indicating cardinality of claimable elements in an indexed format derived from IDT, a third portion indicating path of all 48 claimable elements derived from an IDT, a fourth portion that maps claimable elements to claim types.

Based on the claims that are composed, a claim tree is used to determine cardinality of the claimable elements from the IDT. This factor in turn helps determine Invention Cardinality (IC). Said term can be defined in the present context as the number of independent claims an ideation data possesses. For IC > 2, Inventor Community has to review whether to split an ideation data based on density of the dependent claims, alignment of the split invention-parts (concept level split vs. Process level split vs. System level split, etc.).

In a first representation, the IDT is visualized. The IDT comprises 48 cells that define an ideation object across Category, Area and Characteristic dimensions. With reference to Figure 9A, an ideation data (main node) comprises, 3 child nodes (primary node), i.e. the category dimensions (NIU attributes), which in turn comprises, 4 child nodes (secondary node), i.e. the area dimension (PTMS attributes), which further comprises 4 child nodes (tertiary node), i.e. characteristic dimension (EA3 attributes). As one traverses the tree, terminal nodes are represented by EA3 characteristics.

In a second portion, claimable elements of an ideation data when traversed from the root are visually represented in the 48-cell Bar Map (Figure 9A). Cardinality is determined for a set of claimable elements fixed within the IDT. An

instance of a plurality of claimable elements is represented by a plurality of tags, and for a path where there is no element is represented by another tag for differentiation. Said visual indication representing cardinality of claimable elements is termed as Claim Cardinality Index. Plurality of claimable elements is represented by a plurality of tags. For example, 3 claimable elements are represented by (●●●) and absence of claimable element is indicated by (x).

A third portion is a further representation of the Claim Tree, which comprises tracing the path along which the ideation objects related to an ideation data have traversed, from root to primary node to secondary node to tertiary node (NIU-PTMS-EA3). For instance, N-P-Eff refers to a claim element that has been identified as novel, being process oriented and having efficient characteristics. This is derived from the IDT as a 48-cell Bar Map indicating path of each of the dimension and attributes that can be associated with a claimable element. Said Bar Map traces path of a claimable element to cardinality indicated in the second portion. If there is no claimable element for a path that can be traced from the root, a visual indicator is used to null elements ($\Phi$) signify a blank. For instance, there is no claimable element in the 48-cell matrix for path N-M-Add, hence it is represented as (N-M-Add- $\Phi$). Similarly, (I-P-Agl-1) refers to one claimable element that has Inventive Step in Process having Agile characteristics.

A blank in the 48-cell Bar Map represents absence of claimable element. Thus, one can easily identify the number of cells out of 48 that have been filled with at least one claimable element and also derive cluster and pattern with respect to the dimension and related attributes.

A further object of the Claim Tree is mapping the claimable elements to types of claims articulated in a patent document (independent, dependent, dependent dependant, etc). Figure 9B, refers to the type of claims (independent, dependent, dependent dependant, etc) that have been derived for an ideation object. This object further comprises 3 elements - a 48-cell Bar Map indicating type of claimable elements for each cell, and a corresponding map to a claim number articulated by Claims Analyst. This is followed by a tree diagram indicative of structural representation of claims thus constructed.

Independent claims can be represented by alphabets, for instance X, Y, Z or any suitable symbol depending on the number of claims. If an independent claim, X comprises 3 elements or steps these can be represented as X.0.1, X.0.2 and X.0.3. A dependant claim having basis in independent claim X can be represented as X.1 (dependent claim 1, or X.2, dependent claim 2). Similarly, a single dependent-dependent claim can be represented as X.1.1. Such taxonomy is intuitive and results in ease-of-mapping.

Claimable elements identified are thus taxonomically distributed within the defined structure with appropriate tags. When a Claims Analyst, articulates a set of claims to be included in a subsequent patent draft, such a tagging and structuring helps define claims. A first independent claim comprising of elements that will be listed in further dependant claims will be tagged as 1, a dependent claim will be (1.1, 1.2,...), dependent-dependent claim will be (1.1,1, 1.2.1, ...). This is mapped to the 48-cell Bar Map that results in a view mapping the X, Y, Z defined earlier to the new claim constructs.

Further, a tree diagram is constructed, wherein, the root node is represented by name of the ideation object, from where independent claims branch out as primary node. An ideation object must have at least one claim. From, the primary node, there are secondary nodes to represent dependant claims; further dependant claims may give rise to additional dependant claims (a tertiary node). At this juncture it is important to note that claimable elements identified in the IDT may be translated into independent/dependant claims based on the nature of the ideation object. Also, there could be a number of statements that could be part of an independent claim. Thus, if an IDT contains N elements, an associated Claim Tree could be compressed into N-X claims.

Thus, a Claims Tree is a comprehensive view of an IDT, Claim Cardinality Index derived from the IDT, path of claimable elements when traversed from root node, and type of claims. A Claims Analyst defines Claims Tree for an ideation object by ensuring that all features, characteristics have been captured. Independent claim elements are analyzed to determine cardinality and subsequent splitting of an ideation object to maintain 'unity of ideation object', i.e. one core concept per ideation object. Claims statements are edited in Claim Mapping and Validation module (603), which is then input to Display and Visualization (503).

After the ideation data is articulated in terms of a completed IDT Matrix and a Claim Tree, the next step is to evaluate, that is, objectively assess the ideation data and determine the inherent character of said data. Attaching a numerical score to an ideation data helps in future valuation of the ideation object and in building an invention portfolio. An ideation data that follows process of collaborative invention mining is accorded a score; thus if there is a need to create a portfolio, a score determine a place in a portfolio. Similarly, a higher score indicates that an ideation data has matured enough to be of value to an organization, through IP Management Interface (613), an ideation object can be evaluated by a Valuation System to determine monetary value.

Metrics Generation Module (507) of the CIM system evaluates and scores ideation objects. Said module comprises sub modules: Scoring and Validation (604), Score Pattern Analysis (605) and Reporting and Views (606). Scoring and Validation sub module (604) scores an ideation object based on a weighted assessment. That is, each dimension - Category, Area and Characteristics are assigned weights. Plurality of attributes attached to each said dimension is also assigned a weight factor. This weight factor for the dimensions can be termed *Dj.*

In the present embodiment, the weight factor *Dj* has been assigned a total weight of 10, and the category

attributes NIU, in turn have been assigned weights in the ratio of 4:3:3. The reason for assigning such a weight distribution leans towards a statistical inference. It has been observed that the broadest independent claims acquire 'broadest protection at the point of Novelty' than the Inventive Step and Utility. Hence, 'Novelty'(N) can be considered as the most significant 'Patentability criterion' an idea must possess, therefore a higher weight factor is assigned for Novelty (N) over Inventive Step (I) and Utility (U). It must be acknowledged and appreciated by a person skilled in the art that weight factor and ratio assigned is variable, depending on which of the patentability criteria or any other dimension and related attributes may be considered important.

Moving towards the weight distribution for the area dimension, weight of (PTMS) × (EA3) has been fixed to be 100 for each of N, I, and U block of the IDT matrix, i.e., the Area attributes for each category dimension and characteristic attributes for each area dimension has further weight distribution in such a manner that the total base weight (without multiplication by the weight factor *Dj*) for each category dimension is 100.

Further sampling through claims of various Patents in the Patent Database results in higher probability of attaining a conceptual (Novelty-based) independent claim protecting a process or technology over measurement and system, whereas for inventive step-based Independent claim, inventions are statistically preferable to be system-based over other area attributes. Further, for Utility-based claims, Measurement area coverage acquires statistical edge over Process, Technology or System based claims.

In an embodiment of the present invention, the weight distribution assigned is as follows. Higher weight for the 'Anticipative' characteristic over 'Agile', 'Efficient' and 'Adaptable' sustenance characteristics and higher weight for the 'Process' and 'Technology' Area attributes over 'Measurement' and 'System' Area attributes for Novelty category. Thus, for N Category,

$$(\text{PTMS} \times \text{EA3})\ \text{Weight} = 10 \times 10 = (3{:}3{:}2{:}2 \times 2{:}2{:}2{:}4)$$

Higher weight is assigned for the 'Anticipative' characteristic over 'Agile', 'Efficient' and 'Adaptable' characteristic and higher weight on the 'System' over 'Process', 'Technology' and 'Measurement' Area attributes for Inventive Step category. Thus, for I Category,

$$(\text{PTMS} \times \text{EA3})\ \text{Weight} = 5 \times 20 = (1{:}1{:}1{:}2 \times 4{:}4{:}4{:}8)$$

Higher weight is assigned on the 'Efficient' characteristic over 'Adaptable', 'Agile' and 'Anticipative' characteristic and higher weight on the 'Measurement' over 'Process', 'Technology' and 'System' Area attributes for Utility category. Thus, for U Category,

$$(\text{PTMS} \times \text{EA3})\ \text{Weight} = 20 \times 5 = (4{:}4{:}8{:}4 \times 2{:}1{:}1{:}1)$$

A scoring method employed in the present embodiment of the invention being described herein is described in the subsequent paras.

**[0109]** An empty cell implies absence of claimable element for an ideation object for the corresponding category-area-characteristic attribute. Thus a value 0 is assigned. Every empty cell in IDT has a value 'zero'. Now, for every contributing cell, there are two scenarios - Having one claimable element or more than one claimable element. For scenarios where there is more than claimable element in a cell, the law of diminishing returns has been applied. This can be contextually stated as in a productive process such as Collaborative Invention Mining, adding more than one claimable element in the same cell of IDT keeping other cells' yield unaltered, will produce lower yield gradually for the contents of that cell. Thus, for every contributing cell, score is defined as:

$$S = \sum_{i=1}^{r} V * \left(\frac{1}{\alpha}\right)^{i-1}$$

where V = Cartesian product value, r = number of claim elements in the contributing (single) cell and $\alpha$ is the diminishing factor (we have further assumed $\alpha$ = 2). Further, considering a symmetric weight distribution across Novelty, Inventive Step and utility block, we obtain the aggregate score for an IDT as 4 × 100 + 3 × 100 + 3 × 100 = 1000. A scorecard and evaluation template (700) that drives the Scoring and Validation (604) sub module of the CIM system is represented

in Figure 7. A person skilled in the art will acknowledge that diminishing factor, weight factor and weight distribution assigned across dimensions and related attributes for an ideation object is variable and can be changed to suit the need as may be.

Further to determining a score, the ideation data is analyzed to determine its dominant characteristics, which will then be used for positioning the invention. Score Pattern Analysis (705) module counts the claim elements and associated score for each cell in each category, area and characteristics dimension and appropriately assigns visual indicators. This feature is important as it serves as a guideline to expand a patent into a portfolio of patents and determine nature of the idea. An idea can be said to be dominant in terms of Novelty, Inventive Step, Utility, Process or Technology or a combination thereof.

Further, the pattern analysis of filled up cells of IDT matrix may project following dominance characteristics and their associated ideation object or invention positioning. These are indicated through Meta metrics published in the scorecard. Refer to Table 6 for details on pattern identification and analysis.

**Table 6: Dominance Table based on Pattern Analysis**

| | **Distribution of Pattern Analysis and Dominance Determination** |
|---|---|
| 'N' Dominance | Idea is Novelty driven, thus has 'concept' dominance |
| 'I' Dominance | Idea is Inventive Step driven, thus has 'model and system' dominance |
| 'U' Dominance | Idea is Utility driven, thus has 'utility' dominance |
| 'P' Dominance | Idea is Process driven, thus has 'process innovation or business method' dominance |
| 'T' Dominance | Idea is Technology driven, thus has timely dominance of 'technology led invention' |

Reporting and Views sub module (606) generates reports of the metrics generated by the CIM process and system. This comprises, Meta metrics for the IDT, cluster/pattern generation and other associated metrics that track an ideation data can be represented in a variety of formats or downloaded as reports by users. Said reports and views are logically coupled to the Display and Visualization module (503) for visual rendering.

Refer to Figure 8, for an illustration of characteristic cluster and an area cluster that has been derived on the basis of cell score and count of claim elements. The output format presented here is only indicative; a person skilled in the art will acknowledge that there is a plurality of ways for visual/graphical representation of the said metrics.

Further to scoring and pattern determination, there are other metrics generated by the CIM system Score Pattern Analysis (605) to determine performance effectiveness of the collaborative process. For an enterprise, this is an important window to gauge the strength of the ideation funnel or innovation throughput of its units and subunits. The metrics identified are explained in the following paras. However, it is important to note that the metric and measures listed here are only indicative and should not be construed as limiting.

Density Lift will determine the coverage enhancement of the mined ideation data across category, area and characteristic dimension, wherein the 'Claims Lift' will determine the 'protection enhancement'. The last two parameters in the Performance Measure table , viz., % Mined Idea filed for patent in 'X' and '2X' time period, as determined by an enterprise to determine the success of the Collaborative Invention Mining Process. The measurement criteria and definitions are presented Table 6 below.

**Table 7: List of Performance Metrics**

| | Invention Mining Performance Measure |
|---|---|
| Cell Density | Ratio of 'filled cell' to 'total cell' |
| Claims Density | Ratio of 'claimed item' to 'total cell' |
| Density Lift | exit 'cell' density - entry 'cell' density |
| Claims Lift | exit 'claims' density - entry 'claims' density |
| % Mined Idea filed as Patent | % Mined Idea filed for patent in 'X' time period (say, X = 2months) |
| % Mined Idea filed as Patent | % of Mined Idea filed for patent in '2X' time period |

The output of the Compose stage is a Technical Note and a Claims Tree. These two objects will be used at a later stage by an enterprise to file a patent application for said idea. After core characteristics and features of an ideation data have been established, a Technical Writer prepares a Technical Note that embodies patentable features of an invention. Once a Technical Note is logged into the system, the IP Management Interface module (613) may interface with an enterprise's IP Management or Filing system to commence the patenting process.

Thus, the Collaborative Invention Mining System and method together objectively assess an idea so as to make it patentable. An ideation data is matured stage by stage, through a collaborative framework. Plurality of modules within CIM system interact to facilitate in maturing ideation segments of an ideation data iteratively thereby allowing various stakeholders to contribute to an ideation object. Metrics Generation Module (507) provides an insight into the inherent characteristics of an ideation object, and also generates a scorecard for said ideation object. Objective of the CIM system and method is to produce ideation data that can be patentable and protected as intellectual property. These ideation objects can also be assessed further by logically connecting to other enterprise systems such as IP Management and Filing System, Valuation System and others to derive benefit from ideas thus generated.

An exemplary embodiment of the system and method for Collaborative Invention Mining is the present invention itself. The present application for System and Method for Collaborative Invention Mining has been matured into a patentable ideation data through the collaboration process, enabled by a state-of-the art system.

The objective of the subject matter is to mature an ideation data into a patentable ideation object with reference to existing prior art and convert it into an intellectual property asset. With this objective, the first step is to enumerate potential patentable aspects of the ideation data. In this case, the broad elements of the ideation data are the Collaborative Invention Mining System, process based approach for collaboratively maturing the idea, and a scoring method to assess an ideation data and performance of invention mining.

The segments of the ideation data were processed further across the stages of Storm, Form, Norm and Compose and matured through questioning, deliberation, segmenting and then converged to make it patentable. In the Storm stage, the Storm pad contains ideation objects that need widening across Novelty, Inventive Step and Utility category. The objects listed are questioned through role play, in order to determine Novelty, Inventive Step and Utility. The objects identified are validated by performing a detailed prior art search in which similar features were searched in patent and non-patent literature sources. Search results were mapped to the broad elements listed in the Storm pad. This focused questioning led to identifying 10 such claimable elements. Refer to Table 8.

**Table 8: Storm Pad**

| |
|---|
| Storm Pad:<br>N1-Design of the CIM method (IDT) (Idea derivation and strengthening through structured questioning and suggestive option)<br>N2-Dimension and Attribute Identification and Context based Definition<br>N3-SFNC Collaboration phases and context based Definition<br>N4-Design of weight and scoring method<br>N5-Metrics Identification and Definition<br>I1-Collaboration process at each iteration phase<br>I2-Context based usage of collaboration tools to optimize collaboration throughput<br>I3-Mapping of cell level weight and score<br>I4-Pattern Analysis of cell distribution<br>U1-A system module supporting the CIM process and integration with IP management system |

In the Form stage, the ideation objects were lengthened to determine PTMS elements from among the elements listed in the Storm pad. These objects were again validated by performing a prior art search and mapping the search results to the segments identified in the Form pad (Table 9). At the end of the Form stage, the claimable objects were sorted into PTMS areas, and it is important to note that a statement can fit into more than one category, which is again segmented and elaborated in the Norm stage.

**Table 9: Form Pad**

| |
|---|
| Form Pad: |
| P-Statement: N1, N2, N3, I1, I4 |
| T-Statement: N3,12,13 |
| M-Statement: N4, N5,13 |
| S-Statement: N1, I2, U1 |

In the Norm Stage, the ideation data is segmented into the EA3 characteristics such that each feature identified can be constructed as a claim in the Norm matrix of the Idea Detailing Tree. Through role play, these features are validated against prior art objects (Refer to Table 10). A total of 29 claimable elements have been determined. The next stage in collaboration is Compose stage.

Table 10: Norm Stage

| Category (NIU) | Area (PTMS) | Characteristic (EA3) | | | |
|---|---|---|---|---|---|
| | | Efficient | Adaptable | Agile | Anticipative |
| Novelty | Process | 1. Dimension & Attribute Identification<br>2. Identification of tasks based on iterative phases | 1. Context based definition of dimension & attribute<br>2. Context based definition of iterative phases | 1. Differentiating process at each iterative phase | 1. Design of the CIM method<br>2. Design of iterative phases (SFNC) in CIM<br>3.Design of CIM Model |
| | Technology | 1. Context based usage of collaboration tools for throughput optimization | | 1. Adoption of collaboration technology for fast tracking response in each iterative phase | |
| | Measurement | 1. Metrics identification for tracking CIM effectiveness | | | 1.Weight and score design associated with NIU, PTMS and EA3 |
| | System | | | | 1. System design of CIM |
| | | | | | |
| Inventive Step | Process | 1. Analysis of cell distribution pattern and invention categorization | | 1.Claim Tree Construction | 1.IDT Matrix based claim elements deliberation and mapping |
| | Technology | | | | |
| | Measurement | 1. Principle for cell density computation | | | |
| | System | | | | 1. Interactive system and inventive screen design for SFNC phases |
| | | | | | |
| Utility | Process | 1. Role Play at iterative phase | | | |

| Category (NIU) | Area (PTMS) | Characteristic (EA3) | | | |
|---|---|---|---|---|---|
| | | Efficient | Adaptable | Agile | Anticipative |
| | Technology | 1. Enablement of collaboration technology in the system | | | |
| | Measurement | 1. Validate, score and evaluate claim elements iteratively | | 1. Measurement for effectiveness of invention mining throughput | |
| | System | 1. System to track progress on invention mining throughput<br>2. IDT schema visualization | 1. Integration with invention administration<br>2. Integration with invention portfolio management | | 1. A system to digitize CIM method |
| | | | | | |

In the Compose stage, the claimable elements identified in the Norm stage are analyzed to determine patterns and clusters. Further, based on the number of statements and cluster analysis, the ideation objects can profiled to check if contains more than one subject matter. For instance, some of the strengths of the current subject matter are being process-oriented and comprising features that make it efficient (Refer to Table 11).

**Table 11: Compose Stage Metrics**

| |
|---|
| Meta Metrics: # of cells populated = 22, # of statements populated = 29, Category cluster(s) = 2 - N,U, Area cluster (s) =4 - NP, NT, US, Characteristic cluster (s) =6 - N-Eff, N-Agl, N-Ant, U-Eff, U-Add |

In addition, each claimable object is reviewed and a Claim Tree is constructed. The Claim Tree comprises detailed information about the claimable elements identified and fixed in the Norm matrix. Refer to Figure 9A and Figure 9B for representation of the Claim Tree. Thus, in Figure 9A, a path for all elements that can be part of IDT is illustrated in a tree format. Number of claimable elements for each cell in the IDT is derived, which account to be 29. Thus a Claim Cardinality Index is determined, which is then broken down further to indicate the path of each claim with respect to the dimensions category, area and characteristics and related attributes. Claims are then structured to identify independent and dependent claims and their related claimable subject matter (Figure 9B). Claimable elements are mapped to actual claim statements that have been listed in the present application; this map is represented as a claim tree.

Claimable elements for the subject matter described herein can be interpreted in the following manner.

**Claim Cluster A: System Design of CIM**

| |
|---|
| Independent 1: (System Design of CIM) N-S-Ant<br>Dependent1: System to track progress on invention mining throughput (U-S-Eff1) + IDT schema visualization (U-S-Eff2)<br>Dependent 2: A system to digitize CIM method (U-S-Ant)<br>Dependent3: Enablement of collaboration technology in the system (U-T-Eff) |
| Dependent4: Integration with invention administration + Integration with invention portfolio management + Integration with invention valuation system (U-S-Add-1,U-S-Add-2,U-S-Add3)<br>Dependent 5: Interactive system and inventive screen design for SFNC phases (I-S-Ant)<br>Dependent: Claim Tree Construction (I-P-Agl) |

**Claim Cluster B: Design of the CIM Method: SFNC, ETVX, Role, Collaboration technology**

| |
|---|
| Independent Claim 2: (Design of the CIM Method) N-P-Ant1<br>Dependent1: Design of iterative phases (SFNC) in CIM (N-P-Ant-2) + Context based definition of Iterative Phases (N-P-Add-2)<br>Dependent 2: Differentiating process at each iterative phase (questioning/deliberating/segmenting/converging) (N-P-Agl)<br>Dependent 3: 1. ETVX based collaboration system and role play to manage progress and convergence (N-T-Ant) + 2. Identification of tasks based on iterative phases (N-P-Eff-2)<br>Dependent4: Role Play at Iterative Phase (U-P-Eff)<br>Dependent5: Validate, score and evaluate claim elements iteratively (U-M-Eff)<br>Dependent 6: Adoption of collaboration technology for fast-tracking response in each iterative phase (N-T-Agl)<br>Dependent 7: Context based usage of collaboration tools for throughput optimization (N-T-Eff)<br>Dependent 8: Dimension and attribute identification (N-P- Eff) and Context based definition of dimension & attribute (N-P-Add)<br>Dependent 9: IDT Matrix based claim elements deliberation and mapping (I-P-Ant) |

**Scoring C: Weight &Score design, pattern, cluster, dominance, performance measurement**

| |
|---|
| Independent 3 : Weight and score design associated with NIU, PTMS and EA3) N- M-Ant<br>Dependent1: Principle for cell density computation (I-M-Eff) |
| Dependent2: Analysis of cell distribution pattern and invention categorization (Clustering and dominance) (I-P-Eff) |

(continued)

| |
|---|
| Dependent 3: Measurement of effectiveness of invention mining throughput (U-M-Agl) |
| Dependent4: Metrics identification for tracking CIM effectiveness (N-M-Eff) |

Further, based on the statements populated, the idea has been scored. The current subject matter has been evaluated to have a score of 653 out of 1000 (Refer to Table 12). In addition to the scorecard, clusters and patterns pertaining to the dimensional attributes have been generated (Refer to Table 12. These clusters can be overlapping clusters (e.g. U-Eff and US), disjoint clusters (U-eff and N-Ant), sub-clusters (US and U-Add), percolative clusters (NP). Category clusters have been identified based on (i) majority of cells filled in Novelty block, Inventive Step block or Utility block, and (ii) determining the correlation amongst (bracketing) the claim segments further if connected. Based on this method, two Category clusters, viz., Novelty-cluster and Utility-cluster have been identified for the CIM invention. In each of the Category (N, I or U) blocks, Area clusters are further identified based on correlated claim elements across P, T, M and S coverage correlation and Characteristic clusters are identified based on the Eff, Add, Agl and Ant Correlation. Thus, we have identified 3 Area clusters, viz., NP, NT, US and 5 Characteristic clusters, viz., N-Eff, N-Agl, N-Ant, U-Eff, U-Add. Refer to Figure 8 for a representation.

This score and cluster represent the strength of the idea with respect to the categories of Novelty, Inventive Step and Utility, which are the foremost criteria to award patents by a patent office. As can be seen, the present subject matter scores highest on novelty, followed by utility and inventive step. This objective assessment of an idea lends confidence to evaluate the merit of the idea. At this level, the claimable elements of the idea have been well established to take necessary steps to protect the idea as intellectual property.

Table 12: Scorecard

| Invention Mining | | | | IDEA Title: A Collaborative System and Method to Mine Inventions in an Enterprise | | | | | Invention Scorecard |
|---|---|---|---|---|---|---|---|---|---|
| Category (NIU) | | Area (PTMS) Description & Weight | | Characteristic (EA3) Description & Weight | | | | | Category Score |
| | | | | Desc. | Efficient | Adaptable | Agile | Anticipative | |
| Desc. | Wt. | Desc. | PTMS: 10, EA3: 10 | | 2 | 2 | 2 | 4 | N_Score |
| Novelty | 4 | Process | 3 | Max. Value 100 (10*10) | 6+3 | 6+3 | 6 | 12+6+3 | 89 |
| | | Technology | 3 | | 6 | | 6 | 12 | |
| | | Measurement | 2 | | 4 | | | 8 | |
| | | System | 2 | | | | | 8 | |
| Desc. | Wt. | Desc. | PTMS: 05, EA3: 20 | | 4 | 4 | 4 | 8 | I_Score |
| Inventive Step | 3 | Process | 1 | Max. Value 100 (05*20) | 4 | | 4 | 8 | 36 |
| | | Technology | 1 | | | | | | |
| | | Measurement | 1 | | 4 | | | | |
| | | System | 2 | | | | | 16 | |
| Desc. | Wt. | Desc. | PTMS: 20, EA3: 05 | | 2 | 1 | 1 | 1 | U_Score |
| Utility | 3 | Process | 4 | Max. Value 100 (20*05) | 8 | | | | 63 |
| | | Technology | 4 | | 8 | | | | |
| | | Measurement | 8 | | 16 | | 8 | | |
| | | System | 4 | | 8+4 | 4+2+1 | | 4 | |
| Aggregate Invention Scorecard (Out of 1000) = 4 * N_Score + 3 * I_Score + 3 * U_Score | | | | | | | | | 653 |
| Meta Metrics: # of cells populated = 22, # of statements populated = 29, Category cluster(s) = 2 - N,U, Area cluster(s) =3 - NP, NT, US, Characteristic cluster (s) =5 - N-Eff, N-Agl, N-Ant, U-Eff, U-Add | | | | | | | | | |

Thus, through the collaboration process, the envisaged objects of the Collaborative System and Method to Mine Inventions in an Enterprise have been differentiated from prior art, questioned, deliberated and segmented to elaborate finer objects of the idea in order to render it patentable.

The system and method described herein enables creation of a sustained community of inventors who contribute to an ideation funnel and eventually build patent portfolios that count as valuable intellectual property assets. Thus, an ecosystem of sustained ideation funnel and inventor community is created, which is the foundation to create IP assets.

## Claims

1. A computer-implemented system for transforming an ideation data into an ideation object being representative of

the said data thus transformed, the system comprising:

an input interface configured to receive one or more ideation data from one or more input means of devices;
a processor; and
a memory coupled to the processor, wherein the said memory comprising:

an Idea Detailing Tree module comprising an Idea Detailing Tree matrix enabling analysis and filtering of the ideation data to determine one or more ideation objects in accordance with one or more prebuilt maturity stages;
a Search and Analytics module configured to facilitate the validation and iteration of the ideation data by rendering input from the said collaborating devices and by referring to one or more external database;
a digitized collaboration based Workflow Management module to track ideation data across prebuilt maturity stages;
a Claim Construction module for construction of claimable ideation objects;
an Idea Management module for administration of ideation data;
a Metrics Generation module to evaluate ideation object and generate a set of metrics; and
a Display and Visualization Module to render output ideation object.

**2.** The system as claimed in claim 1, wherein the Idea Detailing Tree (IDT) module comprises:

an Idea Detailing Tree Matrix, wherein the said matrix is a pre-designed rule-based template further comprising at least one of Parking Lot, Storm Pad, Form Pad, and a Norm Matrix; and
an IDT Validation sub module for validation of ideation data received in the Idea Detailing Tree Matrix.

**3.** The system as claimed in claim 1, wherein the Search and Analytics module validates and analyses ideation data, said module comprising at least one of:

a Search Index to store search attributes, wherein said attributes comprises at least one of keywords, classification code, geography, jurisdiction, assignee, and filing particulars;
a Landscaping sub module to perform prior art search and generate search results with associated search artifacts obtained from a search operation; and
a Gap Analysis sub module to identify gaps in terms of ideation object dimensions and related attributes compared to prior art search.

**4.** The system as claimed in claim 1, wherein the digitized collaboration based workflow management module comprises a validation mechanism to progress ideation data from the stages of Storm, Form, Norm and Compose through validation of entry, tasks, and exit criteria defined for each stage.

**5.** The system as claimed in Claim 1, wherein the Claim Construction Module comprises a Claim Mapping and Validation sub module to iteratively derive claimable ideation object corresponding to ideation data matured from the digitized collaboration based workflow.

**6.** The system as claimed in claim 5, wherein the Claim Mapping and Validation sub module is logically and communicatively coupled to said Idea Detailing Tree Module and Display and Visualization module for construction of a Claim Tree.

**7.** The system as claimed in claim 1, wherein the Idea Management module comprises:

a Scheduler to assign roles to tasks defined in a collaborative workflow;
an Idea Tracking sub module to tag ideation data and its associated artifacts and deliverables at each stage in the said collaborative workflow with a unique identification; and
an Alert Publisher sub module to generate alerts to various stakeholders of the said collaborative workflow, wherein alerts trigger at least one of commencement of a task and submission of a deliverable;

**8.** The system as claimed in claim 1, wherein the Metrics Generation module comprises:

a Scoring and Validation sub module to evaluate ideation object using weighted distribution for each category, area and characteristic dimensions;

a Score Pattern Analysis sub module to determine at least one of :

a set of clusters and their characteristics through meta metrics comprising at least one of category clusters, area cluster, and characteristic cluster;
dominance determination through pattern analysis of filled up cells in meta metrics;
performance measure of collaborative invention mining comprising at least one of Cell Density, Claims Density, Density Lift, Claims Lift, and percentage of mined ideation objects filed as patents within a predefined time frame, and

a Reporting and Views sub module to generate reports related to metrics generated for ideation object.

**9.** The system as claimed in claim 1, wherein the Display and Visualization module comprises rendering a graphical ideation object output in a plurality of formats for metrics related to an idea mined; and rendering a Claim Tree in a visual format to indicate category, area, and characteristic of claimable ideation object in the system.

**10.** The system as claimed in claim 9, wherein the Claim Tree comprises:

an arboreal representation comprising a root and a plurality of nodes, wherein each node represents at least one of a category, an area, a characteristic of a claim element of ideation object when traversed from the root;
a representation of Claim Cardinality Index and type of claim elements for ideation object derived from said Idea Detailing Tree module;

**11.** A method of transforming an ideation data into an ideation object being representative of the said data thus transformed, through a singular or plurality of prebuilt maturity stages within a digitized collaborative workflow, the said method comprising:

receiving one or more ideation data from one or more input means of devices and storing them in one or more database;
analyzing and filtering the ideation data by using an Idea Detailing Tree module comprising an Idea Detailing Tree matrix to determine one or more ideation objects in accordance with one or more prebuilt maturity stages comprising a predefined sequence,
facilitating the validation and iteration of the ideation data by rendering input from the said collaborating devices and by referring to one or more external database;
populating the ideation data at each maturity stage in such a manner that each forthcoming maturity stage inherits the ideation data of the preceding maturity stage; and
evaluating and generating a set of metrics associated with said ideation object.

**12.** The method as claimed in claim 11, wherein said dimensions predefined in an Idea Detailing Tree matrix comprise at least one of category, area, and characteristics, further wherein:

Category dimension comprises at least one of Novelty, Inventive Step and Utility attributes;
Area dimension comprises at least one of Process, Technology, Measurement, and System attributes; and
Characteristic dimension comprises at least one of Efficient, Adaptable, Agile and Anticipative attributes.

**13.** The method as claimed in claim 11, wherein the maturity stages of digitized collaborative workflow to transform ideation data comprises at least one of:

Storm Stage, wherein the said ideation data are widened across said Category dimension comprising at least one of Novelty, Inventive Step and Utility attributes through collaborative questioning;
Form Stage, wherein the said ideation data are lengthened across said Area dimension comprising at least one of Process, Technology, Measurement and System attributes through collaborative deliberation;
Norm Stage, wherein the said ideation data are deepened across said Characteristic dimension comprising at least one of Efficient, Adaptable, Agile and Anticipative attributes through collaborative segmenting; and
Compose Stage, wherein claimable ideation elements identified from the said ideation data are converged for claim composition and further evaluated, analyzed to determine at least one of scoring, clustering, patterning and positioning.

**14.** The method as claimed in claim 11, wherein the maturity stages of digitized collaborative workflow to transform

ideation data comprises predefined role play comprising at least one of a moderator, a scripter, an inventor, a prior art analyst, a claim analyst and a technical writer.

**15.** The method as claimed in claim 11, wherein the evaluating further comprising at least one of:

generating an invention score card for an ideation object by computing cell density and cell weight of claimable ideation elements being populated in the evaluation template; and
extracting one or more measurement parameters comprising at least one of:
analyzing cell distribution and pattern identification by clustering claimable ideation elements of the said ideation object;
categorization of the ideation object by determining the dominance of the claimable ideation elements; and
determining an effectiveness parameter of ideation data to ideation object transformation.

**16.** A computer readable medium having embodied thereon a computer program for executing a method comprising:

receiving one or more ideation data from one or more input means of devices and storing them in one or more database;
analyzing and filtering the ideation data by using an Idea Detailing Tree module comprising an Idea Detailing Tree matrix to determine one or more ideation objects in accordance with one or more prebuilt maturity stages comprising a predefined sequence;
facilitating the validation and iteration of the ideation data by rendering input from the said collaborating devices and by referring to one or more external database;
populating the ideation data at each maturity stage in such a manner that each forthcoming maturity stage inherits the ideation data of the preceding maturity stage; and
evaluating and generating a set ofmetrics associated with said ideation object.

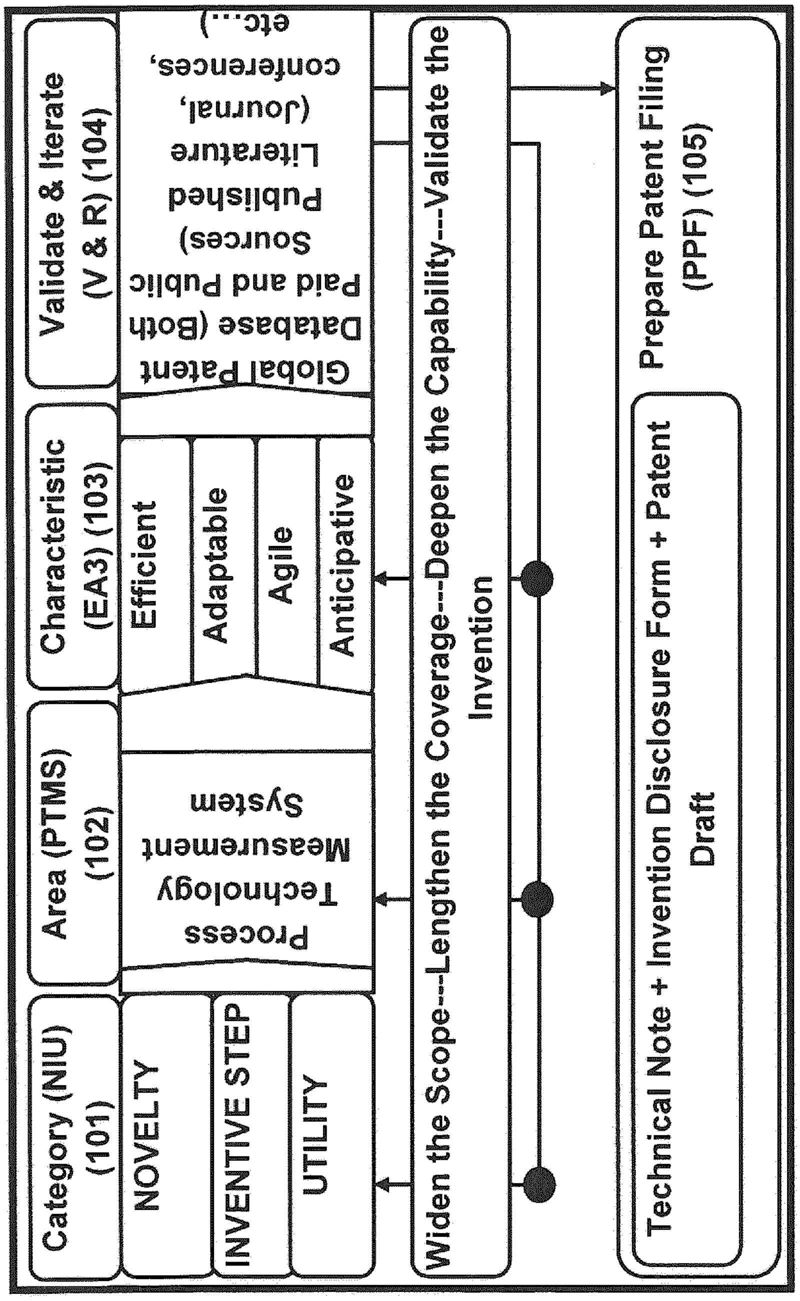
Category (NIU) (101)
NOVELTY
INVENTIVE STEP
UTILITY
Area (PTMS) (102)
Process Technology Measurement System
Characteristic (EA3) (103)
Efficient
Adaptable
Agile
Anticipative
Validate & Iterate (V & R) (104)
Global Patent Database (Both Paid and Public Sources) Published Literature (Journal, conferences, etc...)
Widen the Scope---Lengthen the Coverage---Deepen the Capability---Validate the Invention
Prepare Patent Filing (PPF) (105)
Technical Note + Invention Disclosure Form + Patent Draft

Figure 1

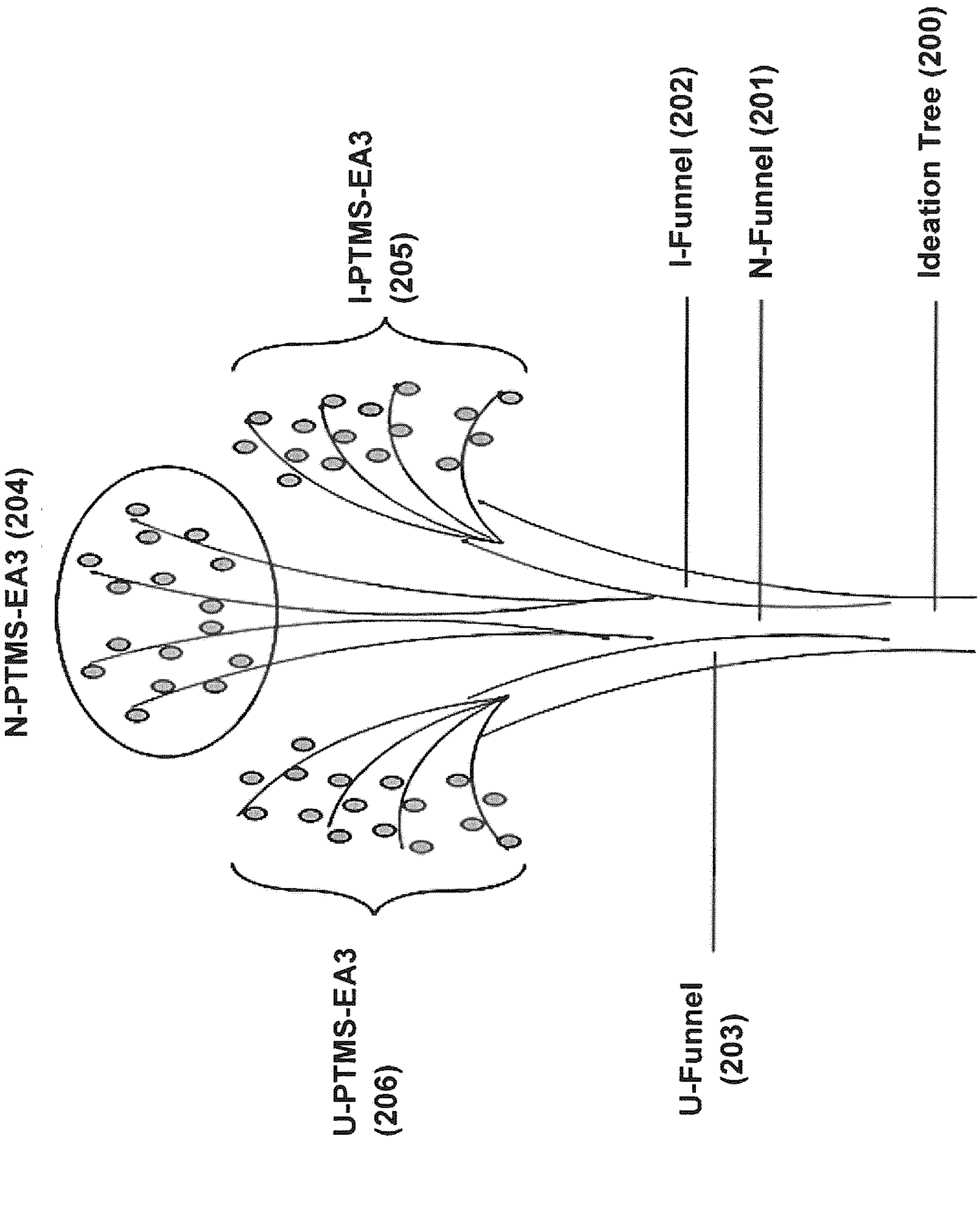
N-PTMS-EA3 (204)
I-PTMS-EA3 (205)
U-PTMS-EA3 (206)
I-Funnel (202)
N-Funnel (201)
Ideation Tree (200)
U-Funnel (203)

Figure 2A

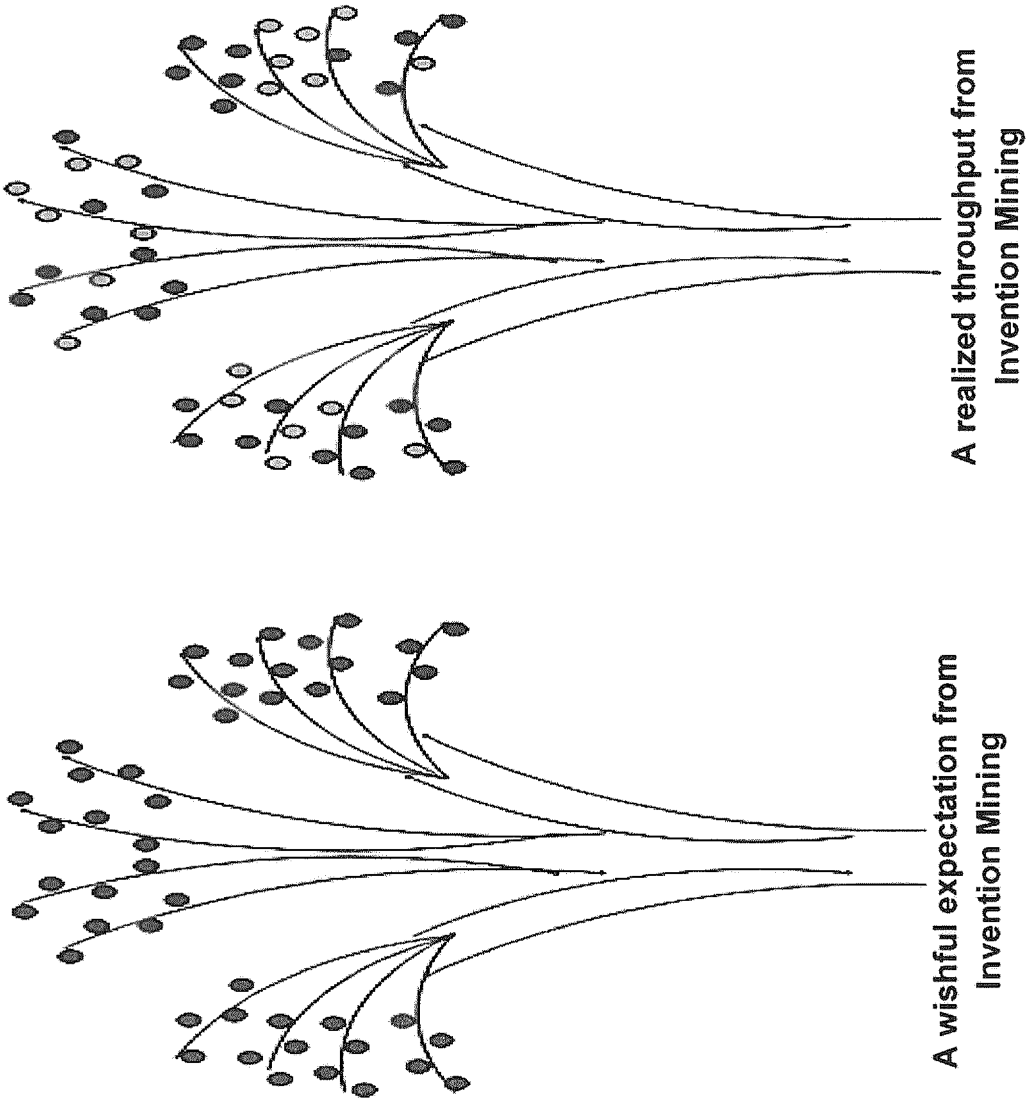
A wishful expectation from Invention Mining
A realized throughput from Invention Mining

Figure 2B

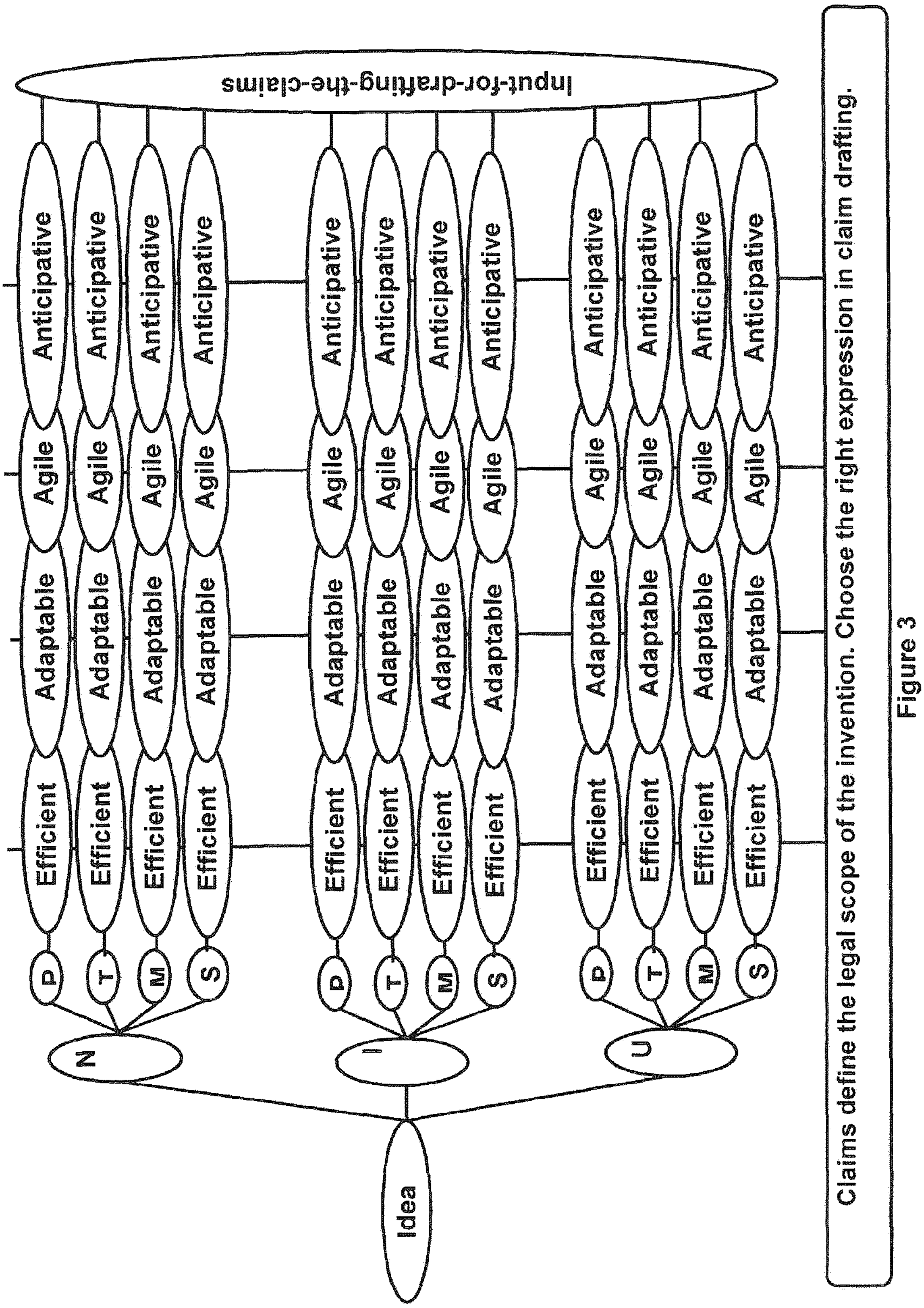
Input-for-drafting-the-claims
Anticipative
Agile
Adaptable
Efficient
P
T
M
S
N
I
U
Idea
Claims define the legal scope of the invention. Choose the right expression in claim drafting.

Figure 3

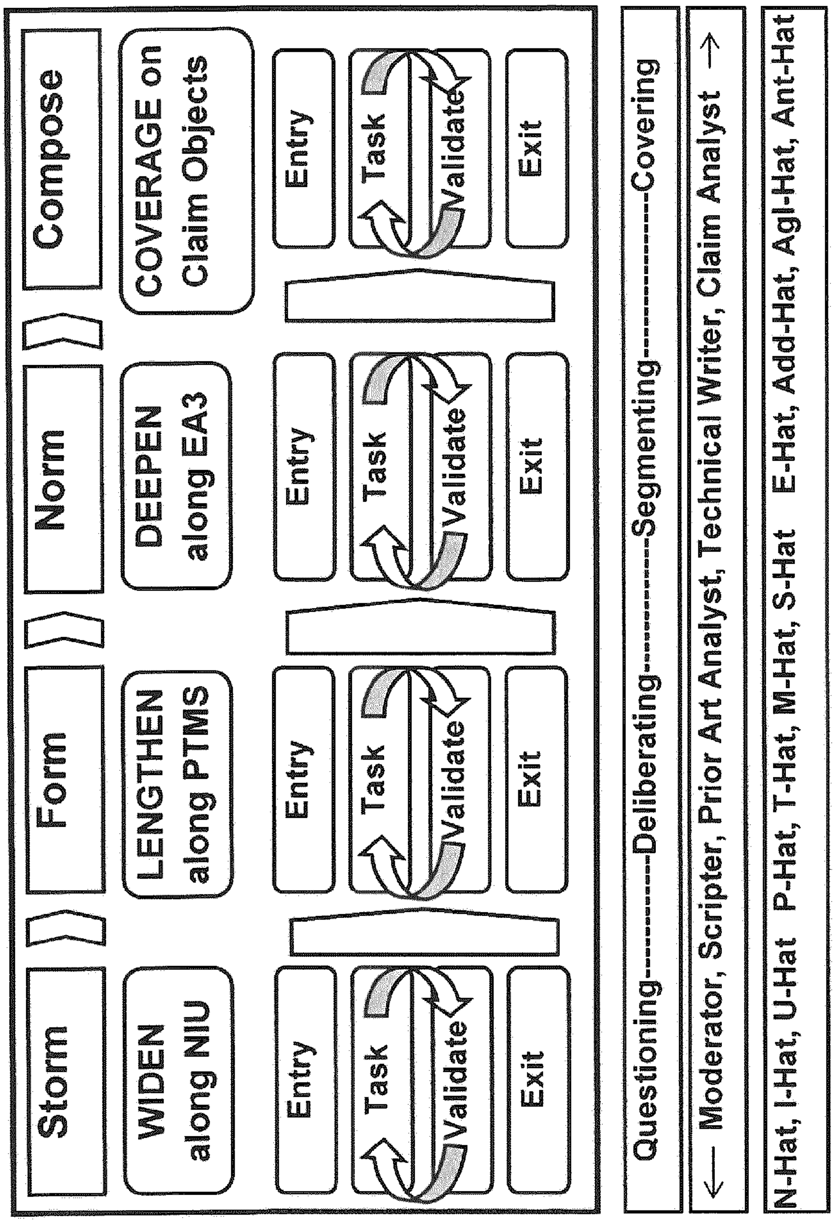
Storm
Form
Norm
Compose
WIDEN along NIU
LENGTHEN along PTMS
DEEPEN along EA3
COVERAGE on Claim Objects
Entry
Task
Validate
Exit
Questioning---------Deliberating---------Segmenting---------Covering
← Moderator, Scripter, Prior Art Analyst, Technical Writer, Claim Analyst →
N-Hat, I-Hat, U-Hat P-Hat, T-Hat, M-Hat, S-Hat E-Hat, Add-Hat, Agl-Hat, Ant-Hat

Figure 4A

| Populate the 48-cell during 'Norm phase' and Rationalize the 48-cell during 'compose phase' | | | | | | Storm Pad: |
|---|---|---|---|---|---|---|
| Invention Mining | | IDEA Title:abc | | Collaboration Flow Maturity: Storm-Form-Norm-Compose | | N1-<br>N2- |
| Each 'claim' statement can be structurally re-stated where the statement can be attributed to category X, coverage area Y and sustenance characteristic Z. | | | | | | N3- |
| Category (NIU) | Area (PTMS) | Characteristic(EA3) | | | | |
| | | Efficient | Adaptable | Agile | Anticipative | |
| Novelty | Process | | | | | N4- |
| | Technology | | | | | N5- |
| | Measurement | | | | | N6- |
| | System | | | | | I1- |
| | | | | | | I2- |
| Inventive Step | Process | | | | | |
| | Technology | | | | | I3- |
| | Measurement | | | | | I4- |
| | System | | | | | I5- |
| | | | | | | I6- |
| Utility | Process | | | | | U1- |
| | Technology | | | | | U2- |
| | Measurement | | | | | U3- |
| | System | | | | | U4- |
| | | | | | | U5- |
| Meta Metrics: #of cells populated=?,# of statements populated=? , Category cluster(s) =?, Area cluster(s) =?, Characteristic cluster(s) =? | | | | | | |
| Form Pad:<br>P-Statement:<br>T-Statement:<br>M-Statement:<br>S-Statement: | | | | | | Parking Lot: |

Figure 4B

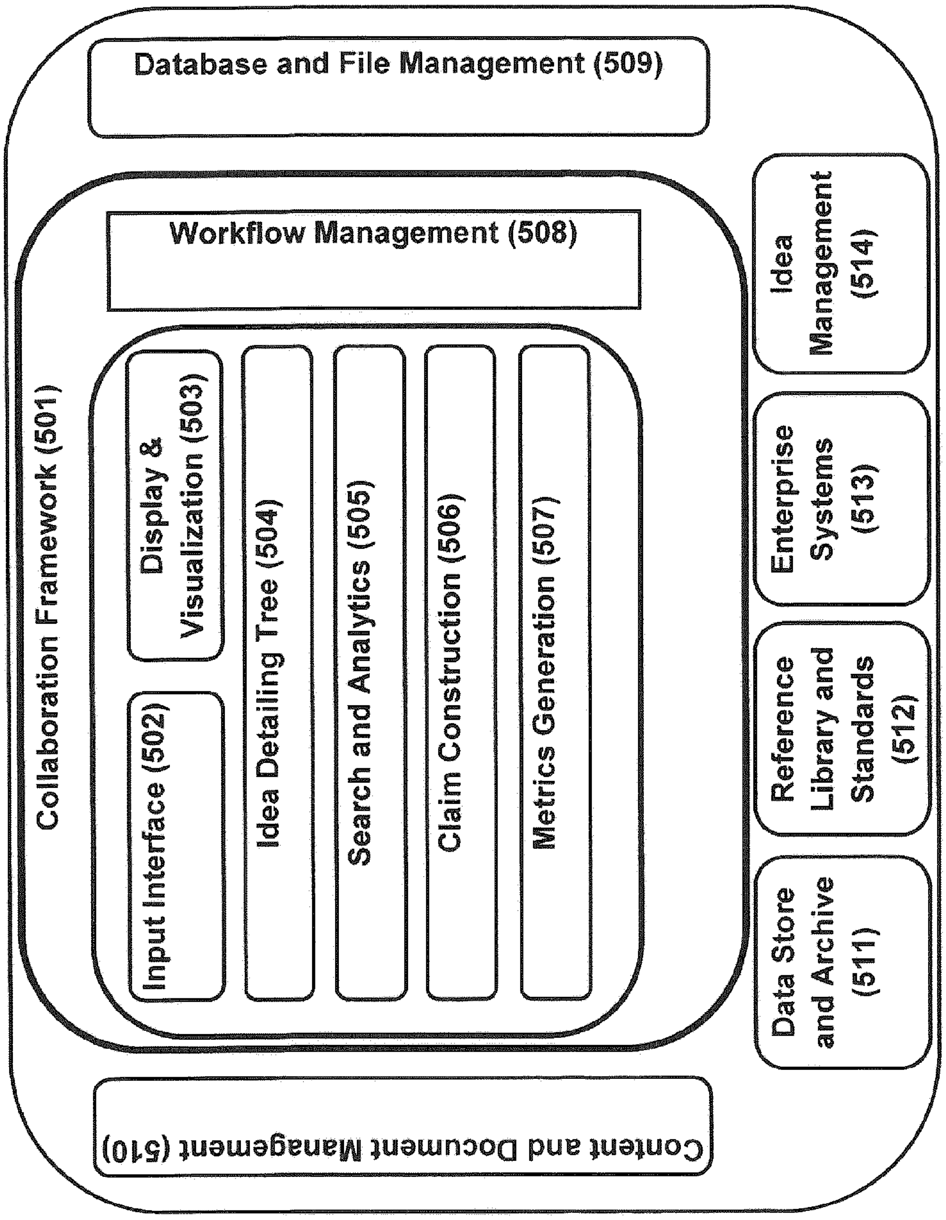
Database and File Management (509)
Workflow Management (508)
Collaboration Framework (501)
Input Interface (502)
Display & Visualization (503)
Idea Detailing Tree (504)
Search and Analytics (505)
Claim Construction (506)
Metrics Generation (507)
Content and Document Management (510)
Data Store and Archive (511)
Reference Library and Standards (512)
Enterprise Systems (513)
Idea Management (514)

Figure 5

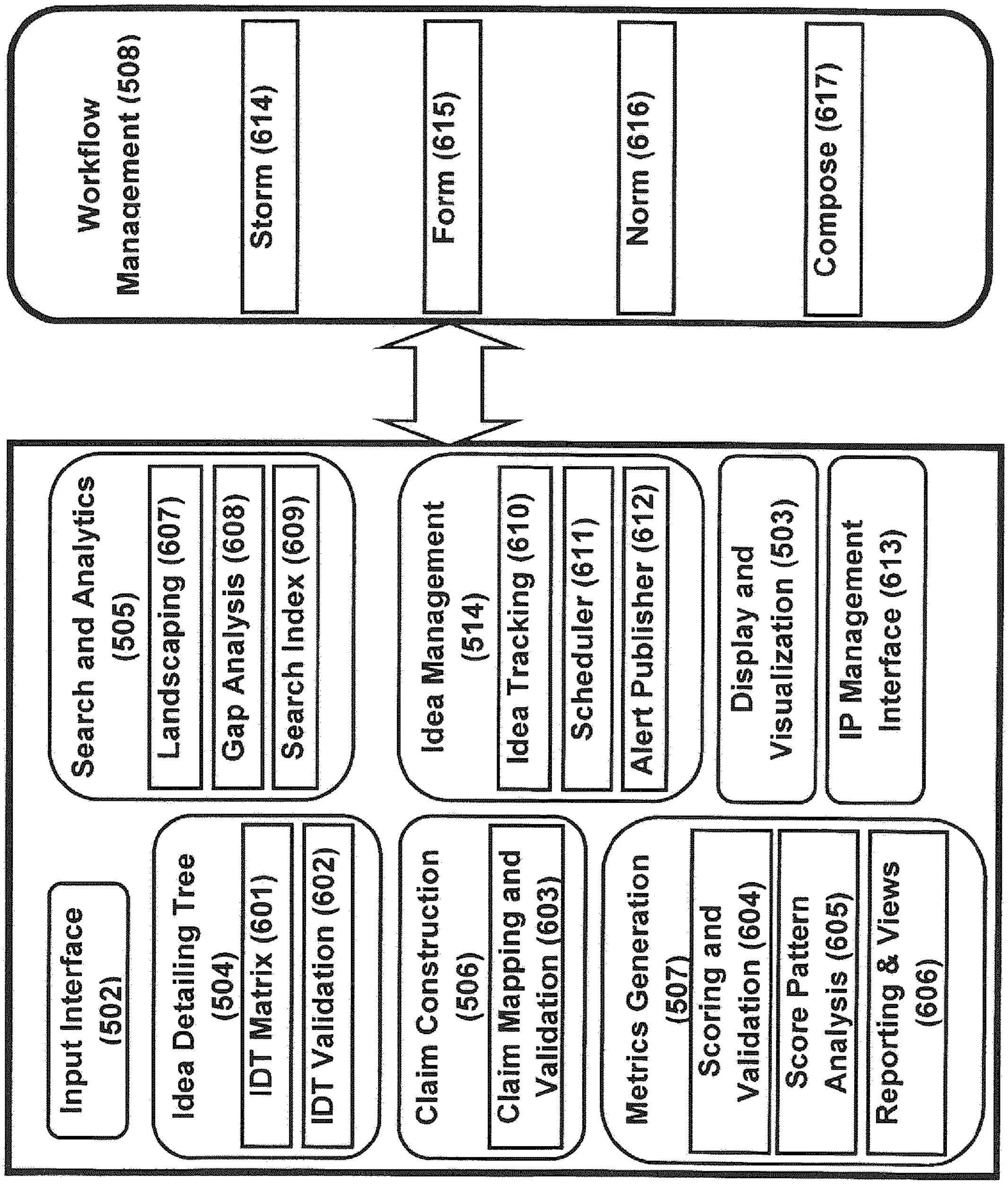

Workflow Management (508)
Storm (614)
Form (615)
Norm (616)
Compose (617)
Input Interface (502)
Idea Detailing Tree (504)
IDT Matrix (601)
IDT Validation (602)
Search and Analytics (505)
Landscaping (607)
Gap Analysis (608)
Search Index (609)
Claim Construction (506)
Claim Mapping and Validation (603)
Idea Management (514)
Idea Tracking (610)
Scheduler (611)
Alert Publisher (612)
Metrics Generation (507)
Scoring and Validation (604)
Score Pattern Analysis (605)
Reporting & Views (606)
Display and Visualization (503)
IP Management Interface (613)


Figure 6

| Invention Mining | | | | Idea Title: abc | | | | Invention Scorecard | |
|---|---|---|---|---|---|---|---|---|---|
| Category(NIU) | | Area (PTMS) Description & Weight | | Characteristic (EA3) Description & Weight | | | | | Category Score |
| | | | | Desc. | Efficient | Adaptable | Agile | Anticipative | |
| Desc. | Wt. | Desc. | | PTMS:10, EA3:10 | 2 | 2 | 2 | 4 | N_Score |
| Novelty | 4 | Process | 3 | Max. | V+V/2+V/4 | V+V/2+V/4 | V+V/2+V/4 | V+V/2+V/4 | |
| | | Technology | 3 | Value | V+V/2+V/4 | V+V/2+V/4 | V+V/2+V/4 | V+V/2+V/4 | |
| | | Measurement | 2 | 100 | V+V/2+V/4 | V+V/2+V/4 | V+V/2+V/4 | V+V/2+V/4 | |
| | | System | 2 | (10*10) | V+V/2+V/4 | V+V/2+V/4 | V+V/2+V/4 | V+V/2+V/4 | |
| Desc. | Wt. | Desc. | | PTMS:05, EA3:20 | 4 | 4 | 4 | 8 | I_Score |
| Inventive Step | 3 | Process | 1 | Max. | V+V/2+V/4 | V+V/2+V/4 | V+V/2+V/4 | V+V/2+V/4 | |
| | | Technology | 1 | Value | V+V/2+V/4 | V+V/2+V/4 | V+V/2+V/4 | V+V/2+V/4 | |
| | | Measurement | 1 | 100 | V+V/2+V/4 | V+V/2+V/4 | V+V/2+V/4 | V+V/2+V/4 | |
| | | System | 2 | (05*20) | V+V/2+V/4 | V+V/2+V/4 | V+V/2+V/4 | V+V/2+V/4 | |
| Desc. | Wt. | Desc. | | PTMS:20, EA3:05 | 2 | 1 | 1 | 1 | U_Score |
| Utility | 3 | Process | 4 | Max. | V+V/2+V/4 | V+V/2+V/4 | V+V/2+V/4 | V+V/2+V/4 | |
| | | Technology | 4 | Value | V+V/2+V/4 | V+V/2+V/4 | V+V/2+V/4 | V+V/2+V/4 | |
| | | Measurement | 8 | 100 | V+V/2+V/4 | V+V/2+V/4 | V+V/2+V/4 | V+V/2+V/4 | |
| | | System | 4 | (20*05) | V+V/2+V/4 | V+V/2+V/4 | V+V/2+V/4 | V+V/2+V/4 | |
| Aggregate Invention Scorecard (out of 1000)=4*N_Score + 3*I_Score + 3*U_Score | | | | | | | | | XXX |
| Meta Metrics:# of cells populated=?,# of statements populated=?, Category cluster(s)=?, Area cluster(s)=?, Characteristic cluster(s)=? | | | | | | | | | |

Figure 7

| Invention Mining | | | | Idea Title: abc | | | | Invention Scorecard | | |
|---|---|---|---|---|---|---|---|---|---|---|
| Category(NIU) | | Area (PTMS) Description & Weight | | Characteristic (EA3) Description & Weight | | | | | Category Score | |
| | | | | Desc. | Efficient | Adaptable | Agile | Anticipative | | |
| Desc. | Wt. | Desc. | | PTMS:10, EA3:10 | 2 | 2 | 2 | 4 | N_Score | |
| Novelty | 4 | Process | 3 | Max. | 6+3 | 6+3 | 6 | 12+6+3 | 89 | 356 |
| | | Technology | 3 | Value | 6 | | 6 | 12 | | |
| | | Measurement | 2 | 100 | 4 | | | 8 | | |
| | | System | 2 | (10*10) | | | | 8 | | |
| Desc. | Wt. | Desc. | | PTMS:05, EA3:20 | 4 | 4 | 4 | 8 | I_Score | |
| Inventive Step | 3 | Process | 1 | Max. | 4 | | 4 | 8 | 36 | 108 |
| | | Technology | 1 | Value | | | | | | |
| | | Measurement | 1 | 100 | 4 | | | | | |
| | | System | 2 | (05*20) | | | | 16 | | |
| Desc. | Wt. | Desc. | | PTMS:20, EA3:05 | 2 | 1 | 1 | 1 | U_Score | |
| Utility | 3 | Process | 4 | Max. | 8 | | | | 63 | 189 |
| | | Technology | 4 | Value | 8 | | | | | |
| | | Measurement | 8 | 100 | 16 | | 8 | | | |
| | | System | 4 | (20*05) | 8+4 | 4+2+1 | | 4 | | |
| Aggregate Invention Scorecard (out of 1000)=4*N_Score + 3*I_Score + 3*U_Score | | | | | | | | | 653 | |
| Meta Metrics: # of cells populated=22, # of statements populated=29, Category cluster(s) =2-N,U, Area cluster(s) =4-NP,NT,IP,US, Characteristic cluster(s)=6-N-Eff,N-Agl,N-Ant,I-Ant, U-Eff,U-Add | | | | | | | | | | |

Characteristic Cluster

Area Cluster

Figure 8

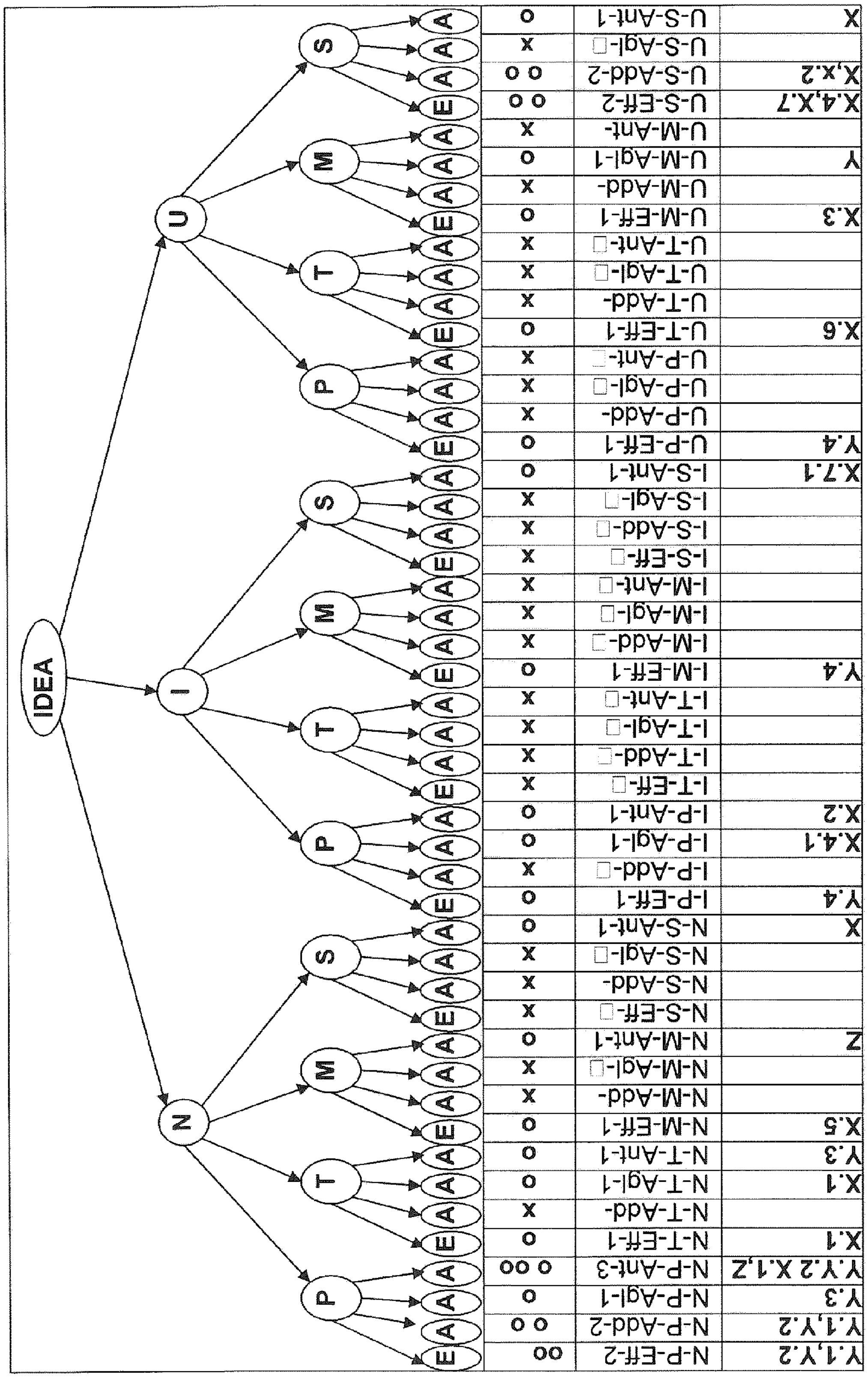
o U-S-Ant-1 X
x U-S-Agl-□
o o U-S-Add-2 X,x.2
o o U-S-Eff-2 X.4,X.7
x U-M-Ant-
o U-M-Agl-1 Y
x U-M-Add-
o U-M-Eff-1 X.3
x U-T-Ant-□
x U-T-Agl-□
x U-T-Add-
o U-T-Eff-1 X.6
x U-P-Ant-□
x U-P-Agl-□
x U-P-Add-
o U-P-Eff-1 Y.4
o I-S-Ant-1 X.7.1
x I-S-Agl-□
x I-S-Add-□
x I-S-Eff-□
x I-M-Ant-□
x I-M-Agl-□
x I-M-Add-□
o I-M-Eff-1 Y.4
x I-T-Ant-□
x I-T-Agl-□
x I-T-Add-□
x I-T-Eff-□
o I-P-Ant-1 X.2
o I-P-Agl-1 X.4.1
x I-P-Add-□
o I-P-Eff-1 Y.4
o N-S-Ant-1 X
x N-S-Agl-□
x N-S-Add-
x N-S-Eff-□
o N-M-Ant-1 Z
x N-M-Agl-□
x N-M-Add-
o N-M-Eff-1 X.5
o N-T-Ant-1 Y.3
o N-T-Agl-1 X.1
x N-T-Add-
o N-T-Eff-1 X.1
oo o N-P-Ant-3 Y.Y.2 X.1,Z
o N-P-Agl-1 Y.3
o o N-P-Add-2 Y.1,Y.2
oo N-P-Eff-2 Y.1,Y.2

Figure 9A

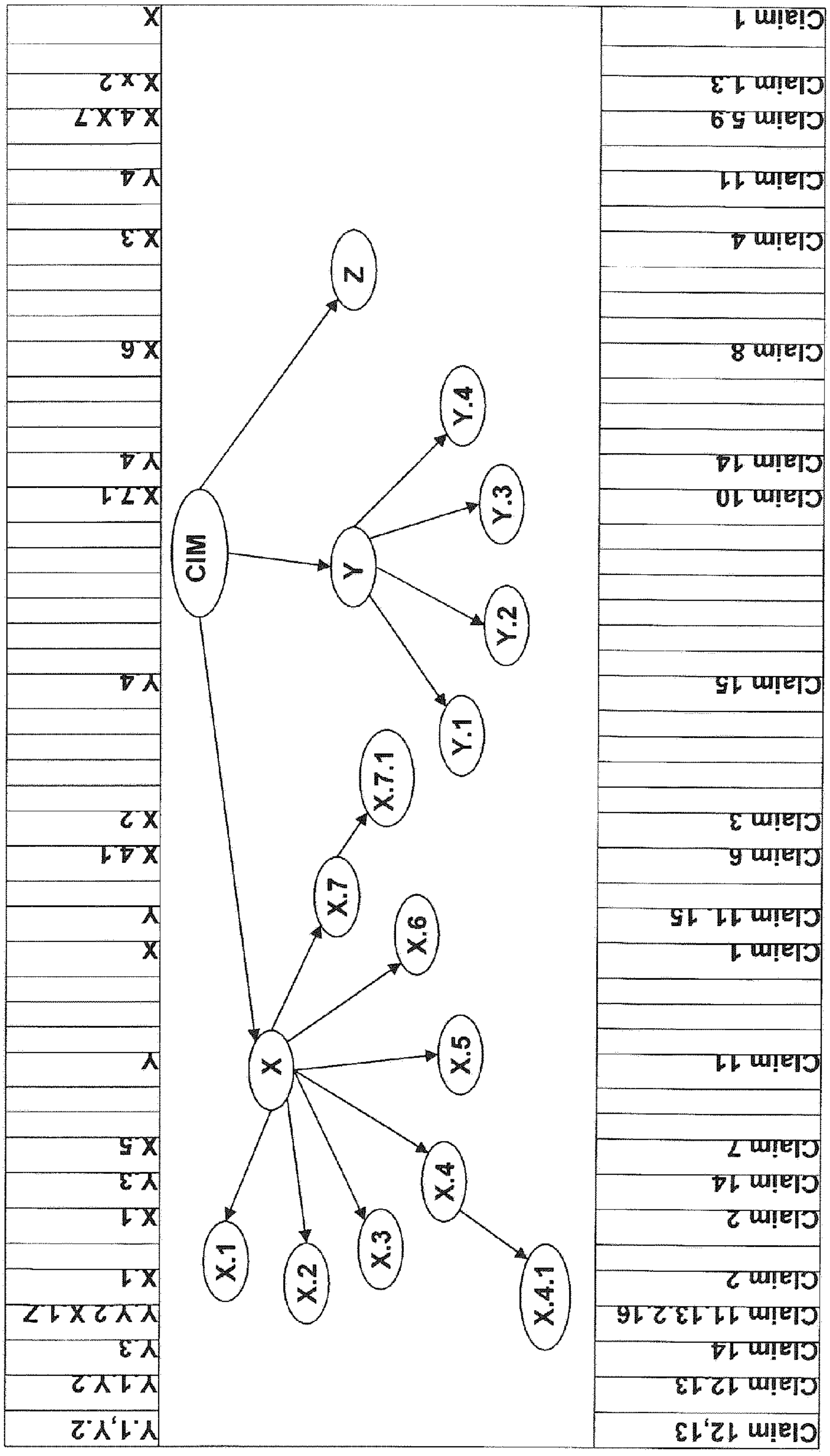
CIM
X
Y
Z
X.1
X.2
X.3
X.4
X.4.1
X.5
X.6
X.7
X.7.1
Y.1
Y.2
Y.3
Y.4
Claim 1
Claim 1.3
Claim 5.9
Claim 11
Claim 4
Claim 8
Claim 14
Claim 10
Claim 15
Claim 3
Claim 6
Claim 11. 15
Claim 1
Claim 11
Claim 7
Claim 14
Claim 2
Claim 2
Claim 11.13.2.16
Claim 14
Claim 12.13
Claim 12,13
X
X.x.2
X.4.X.7
Y.4
X.3
X.6
Y.4
X.7.1
Y.4
X.2
X.4.1
Y
X
Y
X.5
Y.3
X.1
X.1
Y.Y.2.X.1.7
Y.3
Y.1.Y.2
Y.1,Y.2

Figure 9B

Europäisches Patentamt
European Patent Office
Office européen des brevets

# EUROPEAN SEARCH REPORT

Application Number
EP 12 17 1102

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP002498048, ISSN: 0170-9291 * the whole document * ----- | 1-16 | INV. G06Q10/10 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 4 October 2012 | González, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060218173 A
- US 7533034 B
- US 20090132350 A
- US 20110093539 A